# EUROPEAN PATENT APPLICATION

(11) **EP 2 007 064 A1**
(43) Date of publication of application: **24.12.2008**
(21) Application number: 06828314.2
(22) Date of filing: 13.12.2006
(51) Int. Cl.: H04L 12/14, H04M 3/42

(54) **A SYSTEM, METHOD AND APPARATUS FOR IMPLEMENTING THE REVERSE CHARGING IN THE PACKET NETWORK**

(30) Priority: 03.04.2006 CN 200610066704
(71) Applicant: Huawei Technologies Co., Ltd., Longgang District, Shenzhen Guangdong 518129 (CN)
(72) Inventor: WU, Dongjun, Guangdong 518129 (CN)
(74) Representative: Lord, Michael
(86) International application number: PCT/CN2006/003396
(87) International publication number: WO 2007/112623

(57) **Abstract**

The present invention discloses a reverse charging (REV) service system, method and apparatus in a packet network. The system includes: at least one call session control unit; at least one charging processing module; a REV service control unit, configured to control a REV service, wherein the REV service control unit interacts with a call session control unit via Session Initiation Protocol (SIP) and interacts with a charging processing module. The system, method and apparatus provided by the present invention may implement the REV service in the packet telecommunication network; and further implement the REV service between a SIP terminal in a packet telecommunication network and a terminal in the conventional telecommunication network.

## Description

### Field of the Invention

The present invention relates to technology of telecommunication service in a packet network, and particularly to a system, a method and an apparatus for implementing a Reverse Charging (REV) service in a packet network.

### Background of the Invention

The REV is a common telecommunication service in a conventional circuit switched telecommunication network and allows a called terminal, or a service terminal as it is called, to be charged for an entire call or part of the call.

The ITU-T Recommendation I.256.3 defines four cases of reverse charging service in an Integrated Service Digital Network (ISDN): Case A, a calling terminal with the capability for requesting a reverse charging service requests a reverse charging service on a call basis when the call setting up, and a called terminal chooses to accept or reject the charges of the call; Case B, a calling terminal with the capability for requesting a reverse charging service requests, during the active phase of the call, a reverse charging service, i.e. requests the REV for the rest of the call, and a called terminal chooses to accept or reject the rest charges of the call, or a called terminal with the capability for requesting a reverse charging service requests, during the active phase of the call, a reverse charging service, i.e. performs the REV for the rest of the call; Case C, a called terminal requests, before disconnection of the call, a reverse charging service for the entire call, and when the called terminal does not explicitly request the reverse charging, the calling terminal is charged as normal; Case D, a called terminal is charged for all incoming calls without any user request required from the called terminal or a calling terminal.

The ITU-T Recommendations Q.956 and Q.736.3 define couple interface signaling between the terminal-to-network interface, i.e. the extension of Digital Subscriber Signaling System No. 1 (DSS 1) signaling, couple interface signaling between the network-to-network interface, i.e. the extension of Signaling System No. 7 (SS 7) signaling and an implementation process in a conventional circuit switched telecommunication network, for the REV service, where the conventional telecommunication network may be the Integrated Services Digital Network (ISDN).

The extension of DSS 1 signaling defined in the ITU-T Recommendation Q.956 is:
1) the extension of facility message, e.g., adding RequestREV, REVIndication, UserIgnored and REVIsAlreadyRunning parameters at the basic rate interface and primary rate interface, where the RequestREV is used for a REV request and response and includes a Case parameter, a error code and a reason value; and further adding a REV-T-Status parameter at the primary rate (T) interface, where the status includes "wholeCall" and "forTheRestOfTheCall";
2) the extension of NOTIFY message, e.g., adding an information unit, where 1101110 indicates the REV for a whole call and 1101111 indicates the REV for the rest of the call.

The extension of interface signaling SS7 defined in the ITU-T Recommendation Q.736.3 is:
1) the extension of REVCallingReqSetup, used for Case A, where request parameters include transferRequested and callingUserNumber, and response parameters include transferAccepted and calledUserNumber;
2) the extension of REVCallingReqActive, used for the scene that the calling terminal requests the REV in the Case B, where request parameters include transferRequested and callingUserNumber, and response parameters include transferAccepted and calledUserNumber;
3) the extension of REVCalledRequest, used for the scene that the called terminal requests the REV in the Case B, and the Case C and Case D, where request parameters include transferRequested, calledUserNumber and partialCallOnly, and response parameters include transferAccepted, callingUserNumber and duration.

ITU-T Recommendation Q.736.3 also defines two charging modes of the REV service: the first is a non-transfer mode, in which the calling side network performs the charging process after the REV is performed, and the called terminal is charged; the second is a transfer mode, in which the called side network instead of the calling side network performs the charging process after the REV is performed, and the called terminal is charged.

The transferReqeusted and transferAccepted are used for negotiating whether the transfer mode is adopted, and the transfer mode is adopted only when both the calling side network and the called side network support the transfer mode. The negotiation includes the following processes: when the calling terminal requests the REV in the Case A or in the Case B, if the calling side network supports the transfer mode, the calling side network adds the transferReqeusted and callingUserNumber parameters in a REVCallingReqSetup message or a REVCallingReqActive message; if the called side network selects the transfer mode, the called side network adds the transferAccepted in a response, if the called side network selects the non-transfer mode, the called side network adds the calledUserNumber in the response; when the called terminal requests the REV in Case B, or when Case C or Case D takes place, the called side network adds the transferReqeusted and calledUserNumber parameters in a REVCalledRequest message, if the calling side network selects the transfer mode, the calling side network adds the transferAccepted in a response, and if the calling side network selects the non-transfer mode, the calling side network adds the callingUserNumber in the response.

The partialCallOnly is used, when the called terminal requests the REV in the Case B, for indicating to perform REV for the rest of the call; the duration is used in the Case C, if the transfer mode is adopted after the REV is performed, the calling side network notifies the called side network of the time at which the call takes place via the parameter.

The implementations of the REV in the Case A, Case B, Case C and Case D, as defined in ITU-T Recommendations Q.956 and Q.736.3, are explained as follows.

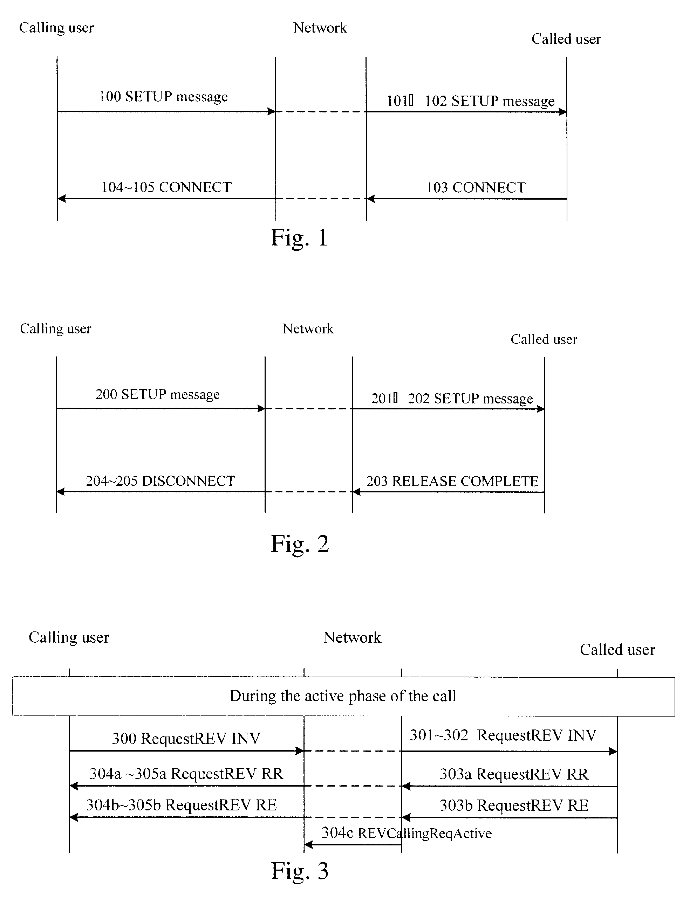

Figure 1 is a flow chart illustrating a method for implementing a REV in the Case A according to a first embodiment of the prior art. Network entities involved include: a calling terminal initiating a call, referred to as the Calling user; a called terminal, referred to as the Called user; and a Network between the Calling user and the Called user. In the embodiment, the process that the Called user accepts the REV request includes the following processes.

100: The Calling user sends a SETUP message, and the SETUP message is a RequestREV INV message, and the RequestREV INV message indicates the Case A.

101: The network side of the Calling user checks whether REV service interworking and SS7 signaling are supported, and if the REV service interworking and SS7 signaling are supported, the network side of the Calling user sends an Initial Address Message (IAM) to the network side of the Called user via a network. The IAM is a REVCallingReqSetup.

102: The network side of the Called user checks whether the Called user subscribes to the REV and whether the REV service is activated, if the Called user subscribes to the REV and the REV service is activated, the network side of the Called user forwards the RequestREV INV to the Called user.

103: The Called user accepts the REV request and sends a CONNECT message, and the CONNECT message is a RequestREV RR message.

104: The network side of the Called user receives the RequestREV RR, sends an answer message (ANM) to the network side of the Calling user, and starts charging the Called user. The ANM is a REVCallingReqSetup.

105: The network side of the Calling user receives the ANM, and performs the call proceeding, and the Calling user is not charged for the call.

Figure 2 is a flow chart illustrating a method for implementing a REV service in Case A according to a second embodiment of the prior art. In the embodiment, the Called user rejects the REV request and the embodiment includes the processes described as follows.

200: The Calling user sends a SETUP message, and the SETUP massage is a RequestREV INV message, and the RequestREV INV message indicates the Case A.

201: The network side of the Calling user checks whether REV service interworking and SS7 signaling are supported, and if the REV service interworking and SS7 signaling are supported, the network side of the Calling user sends an IAM to the network side of the Called user via a network, and the IAM is a REVCallingReqSetup.

202: The network side of the Called user checks whether the Called user subscribes to the REV and whether the REV service is activated, if the Called user subscribes to the REV and the REV service is activated, the network side of the Called user forwards the RequestREV INV to the Called user.

203: The Called user rejects the REV request and sends a RELEASE COMPLETE message. The RELEASE COMPLETE message is a RequestREV RE, and the RequestREV RE may carry an error code (rejectedByUser) and a failure reason (Facility rejected).

204: The network side of the Called user receives the RequestREV RE and sends a REL message to the network side of the Calling user. The REL message is a REVCallingReqSetup, and the REVCallingReqSetup carries the rejectedByUser and Facility rejected.

205: The network side of the Calling user receives the REVCallingReqSetup and sends a DISCONNECT message carrying the rejectedByUser and Facility rejected to the Calling User.

Figure 3 is a flow chart illustrating a method for implementing a REV service in Case B according to an embodiment of the prior art. In this embodiment, the Calling user initiates a REV request. The embodiment includes the processes described as follows.

300: During the active phase of a call, the Calling user sends a facility. The facility is a RequestREV INV, and the RequestREV INV message indicates the Case B.

301: The network side of the Calling user checks whether the call is activated, whether REV service interworking and SS7 signaling are supported and whether the REV service is running, if the call is activated, the REV service interworking and SS7 signaling are supported and the REV service is running, the network side of the Calling user sends a REVCallingReqActive message via a Network to the network side of the Called User.

302: The network side of the Called user checks whether the Called user subscribes to the REV and whether the call is activated; if the Called user subscribes to the REV and the call is activated, the network side of the Called user forwards the facility to the Called user and activates a REV ignore (T-rev) timer.

303a: If accepting the REV request, the Called user sends a RequestREV RR, and the process turns to 304a.

303b: If rejecting the REV request, the Called user sends a RequestREV RE carrying rejectedByUser and Facility rejected, and the process turns to 304b.

304a: If the network side of the Called user receives the RequestREV RR, the network side of the Called user sends a REVCallingReqActive to the network side of the Calling user and terminates the T-rev timer; if the network side of the Calling user adopts the transfer mode, the network side of the Called user performs the charging process for the follow-up call, and the Called user is charged, and the process turns to 305a.

304b: If the network side of the Called user receives the RequestREV RE, the network side of the Called user sends a REVCallingReqActive carrying rejectedByUser and Facility rejected to the network side of the Calling user and terminates the T-rev timer; the call is not affected and the process turns to 305b.

304c: If the network side of the Called user does not receive any message sent from the Called user when the T-rev timer expires, the network side of the Called user sends a REVCallingReqActive carrying a userIgnored to the network side of the Calling User.

305a: If receiving the REVCallingReqActive, the network side of the Calling user stops charging the Calling user and sends a RequestREV RR to the Calling user, and, if the network side of the Calling user adopts the non-transfer mode, the network side of the Calling user charges the Called user for the rest of the call.

305b: If receiving the REVCallingReqActive carrying the rejectedByUser and Facility rejected parameters, the network side of the Calling user forwards the RequestREV RE to the Calling user, and the call is not affected.

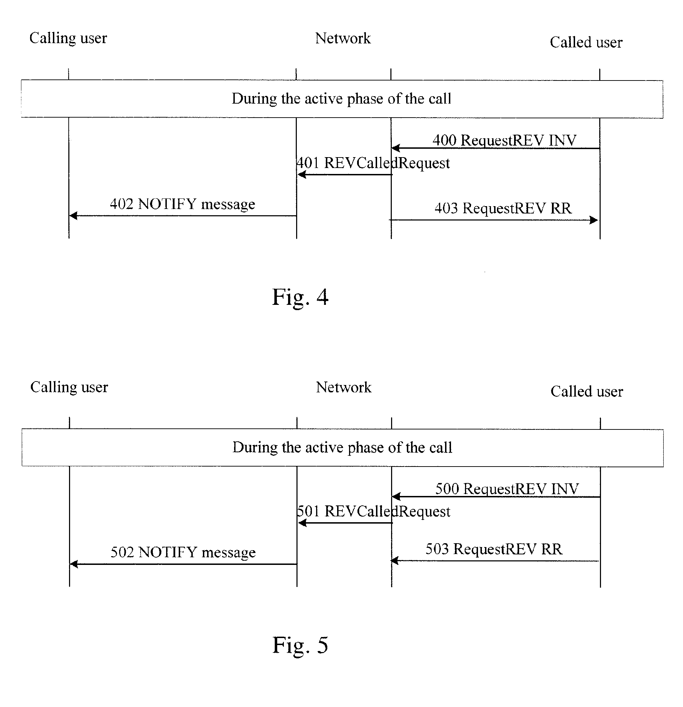

Figure 4 is a flow chart illustrating a method for implementing a REV in the Case B according to an embodiment of the prior art. In this embodiment, the Called user initiates a REV request. The embodiment includes the processes described as follows.

400: During the active phase of a call, the Called user sends a RequestREV INV, and the RequestREV INV indicates the Case B.

401: The network side of the Called user checks whether the call is activated, whether REV service interworking and SS7 signaling are supported and whether the REV is running; if the call is activated, the REV service interworking and SS7 signaling are supported and the REV is running, the network side of the Called user sends a REVCalledRequest to the network side of the Calling user, and the REVCalledRequest carries the partialCallOnly and indicates that the REV is applied only to the rest of the call.

402: Upon receipt of the REVCalledRequest, the network side of the Calling user stops charging the Calling user and sends a NOTIFY message indicating that the REV is applied to the rest of the call, and sends a REVCalledRequest to the network side of the Called user, if the network side of the Calling user adopts the non-transfer mode, the Called user is charged for the rest of the call.

403: Upon receipt of the REVCalledRequest, the network side of the Called user returns a RequestREV RR message to the Called user, if the network side of the Calling user adopts the transfer mode, the Called user is charged for the rest of the call.

Figure 5 is a flow chart illustrating a method for implementing a REV in the Case C according to an embodiment of the prior art. The embodiment includes the processes described as follows.

500: The Called user sends a RequestREV INV during the active phase of a call, and the RequestREV INV indicates the Case C.

501: The network side of the Called user checks whether the call is activated, whether REV service interworking and SS7 signaling are supported and whether the REV is running, if the call is activated, the REV service interworking and SS7 signaling are supported and the REV is running, the network side of the Called user sends a REVCalledRequest to the network side of the Calling User.

502: Upon receipt of the REVCalledRequest, the network side of the Calling user charges the Called user for the whole call, sends a NOTIFY message to the Calling user to indicate that REV is applied to the whole call, and sends a REVCalledRequest to the network side of the Called User; if the network side of the Calling user adopts the transfer mode, the REVCalledRequest carries the duration parameter to indicate the time when the call takes place.

503: Upon receipt of the REVCalledRequest, the network side of the Called user returns a RequestREV RR message to the Called user, if the network side of the Calling user adopts the transfer mode, the network side of the Calling user charges the Called user for the whole call.

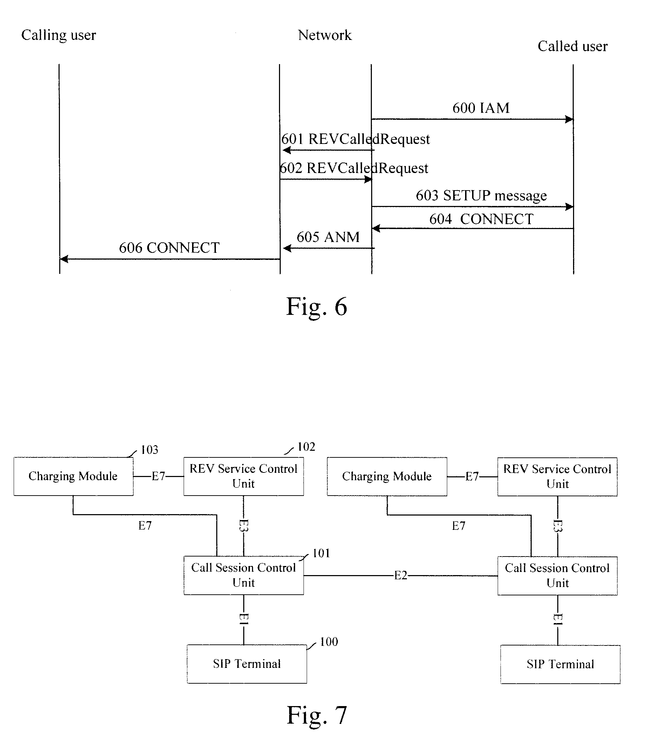

Figure 6 is a flow chart illustrating a method for implementing a REV in Case C according to an embodiment of the prior art. The embodiment includes the processes described as follows.

600: The Calling user sends a SETUP and the network side of the Calling user sends an IAM message to the network side of the Called User.

601: The network side of the Called user checks that the Called user has subscribed to the REV, and then sends a REVCalledRequest to the network side of the Calling User.

602: Upon receipt of the REVCalledRequest, the network side of the Calling user sends a REVCalledRequest to the network side of the Called user; if the network side of the Calling user adopts the non-transfer mode, the network side of the Calling user charges the Called user for the whole call after the call starts.

603: Upon receipt of the REVCalledRequest, the network side of the Called user sends a SETUP message carrying the REVIndication to the Called User; if the network side of the Calling user adopts the transfer mode, the network side of the Called user charges the Called user for the whole call after the call starts.

604: The Called user accepts the call and sends a CONNECT to the network side of the Called User.

605: The network side of the Called user receives the CONNECT and sends an ANM to the network side of the Calling User.

606: The network side of the Calling user receives the ANM and sends a CONNECT to the Calling user indicating the REV is applied to the whole call.

The method illustrated in Figures 1 to 6 cannot be applied to packet telecommunication networks, but to conventional circuit switched telecommunication networks only. With the development of packet technologies, the circuit switched telecommunication network is also developing towards the broadband packet telecommunication network and a trend in the development is to adopt the Session Initiation Protocol (SIP) signaling as the call control signaling of packet telecommunication networks. The REV is a widespread service in the conventional telecommunication networks and is needed in packet telecommunication networks, i.e., is applied with SIP signaling in packet telecommunication networks. However, because the application environment changes, the REV provided for SIP terminals in a packet telecommunication network, e.g., a Next Generation Network (NGN), will inevitably change. For example, in a conventional telecommunication network, the calling user is usually charged and the called user is not charged, therefore the REV service usually is subscribed to by the called user, yet in the NGN both the calling user and the called user may be charged for some cases, so the REV service may be subscribed to by both the calling user and the called user. Furthermore, the REV service also needs to support the communication between a SIP terminal in a packet telecommunication network and a terminal in a conventional telecommunication network during the evolution of telecommunication networks.

To sum up, the REV service is still unavailable in packet telecommunication networks at present and does not support the communication between a SIP terminal in a packet telecommunication network and a terminal in a conventional telecommunication network.

### Summary of the Invention

The objective of embodiments of the present invention is to provide a system for implementing a Reverse Charging (REV) service in a packet network to implement the REV service in the packet network.

The embodiments of the present invention further provide a method for implementing a REV service in a packet network to implement the REV service in the packet network, furthermore, to implement the REV service in a call between a SIP terminal in a packet telecommunication network and a terminal in a conventional telecommunication network.

The embodiments of present invention further provides an apparatus for implementing a REV service in a packet network, i.e. a REV service unit, and the apparatus is arranged in the packet network and is used for implement the REV service in the packet network.

To attain the above objectives, the technical solution of the embodiments of the present invention is as follows.

A system for implementing a REV service in a packet network includes: a REV service control unit, configured to control a REV service, wherein the REV service control unit interacts with a call session control unit via a Session Initiation Protocol (SIP) message and interacts with a charging processing module via a message.

A method for a REV service in a packet network includes:
sending, by a network of a calling terminal, a SIP message carrying REV information to a network of a called terminal, and determining, by the network of the called terminal, to apply a REV according to the REV information carried in the SIP message; or
sending, by the network of the called terminal, a SIP message carrying REV information to the network of a calling terminal, and determining, by the network of the calling terminal, to apply the REV according to the REV information carried in the SIP message.

A method for implementing a REV service in a packet network includes:
sending, by a network of a calling terminal, a SIP message carrying REV information to a network of a called terminal, and determining, by the network of the called terminal, to apply a REV according to the REV information carried in the SIP message; or
sending, by a network of a called terminal, a SIP message carrying REV information to a network of a calling terminal, and determining, by the network of the calling terminal, to apply the REV service according to the REV information carried in the SIP message.

After the network of the called terminal determines to apply the REV, the method further includes:
sending, by the network of the called terminal, a SIP message carrying the REV information to the network of the calling terminal; and determining, by the network of the calling terminal, to apply the REV according to the REV information in the SIP message;
after the network of the calling terminal determines to apply the REV, the method further includes:
   sending, by the network of the calling terminal, a SIP message carrying the REV information to the network of the called terminal; and determining, by the network of the called terminal, to apply the REV according to the REV information carried in the SIP message.

A method for a REV service in a packet network includes:
sending, by a circuit switched telecommunication network, a message carrying REV information to a packet telecommunication network, and determining, by the packet telecommunication network, to apply the REV according to the REV information in the message; or
sending, by the packet telecommunication network, a message carrying REV information to the circuit switched telecommunication network, and determining, by the circuit switched telecommunication network, to apply the REV service according to the REV information in the message.

After the packet telecommunication network determines to apply the REV, the method further includes:
sending, by the packet telecommunication network, a message carrying the REV information to the circuit switched telecommunication network; and
determining, by the circuit switched telecommunication network, to apply the REV according to the REV information in the message;

After the circuit switched telecommunication network determines to apply the REV, the method further includes:
sending, by the circuit switched telecommunication network, a message carrying the REV information to the packet telecommunication network; and
determining, by the packet telecommunication network, to apply the REV service according to the REV information in the message.

A REV service control unit includes: a SIP processing module, a REV service logic processing module and a REV notification module.

The SIP processing module is configured to receive a SIP message from a call session control unit, parse the SIP message and sending the parsed SIP message to the REV service logic processing module; or generate a SIP message according to a processing result of a REV service logic processing module and send the SIP message to the call session control unit;

The REV service logic processing unit is configured to perform logic process according to the SIP parsed message from the SIP processing module and user subscription information stored in the REV service logic processing unit, and notify the SIP processing module and the REV notification module of a processing result of the logic process; and

The REV notification module is configured to notify a charging processing module to apply the REV upon receipt of the processing result of the logic process from the REV service logic processing module.

It can be seen from the technical scheme above that the system and method provided by the embodiments of the present invention enables the REV information to be sent in the SIP message, so that any of the following processes may be implemented in the packet network through: when a call is set up, the calling SIP terminal requests or indicates that the called SIP terminal is charged, the calling SIP terminal requests to be charged for the called SIP terminal, the called SIP terminal requests or indicates that the calling SIP terminal is charged, or the called SIP terminal requests to be charged for the calling SIP terminal; during the active phase of the call, the calling SIP terminal requests that the calling SIP terminal is charged or the called SIP terminal is charged, or the called SIP terminal requests that the calling SIP terminal is charged or the called SIP terminal is charged.

Furthermore, when a SIP terminal in the packet telecommunication network communicates with a terminal in the circuit switched telecommunication network, a gateway control unit in the packet telecommunication network converts the SIP message carrying the REV information into a message carrying the REV information, where the message is supported by the circuit switched telecommunication network, or converts a message carrying the REV information, where the message is supported by the circuit switched telecommunication network, into the SIP message carrying the REV information, therefore the following processes may be implemented: when a call is set up, the calling terminal requests that the called SIP terminal is charged, or the calling SIP terminal requests that the called terminal is charged; during the active phase of the call, the calling terminal requests that the called SIP terminal is charged, or the calling SIP terminal requests that the called terminal is charged, or the called terminal requests to be charged for the calling SIP terminal, or the called SIP terminal requests to be charged for the calling terminal; before the call is set up, the called terminal is configured in advance to be charged for the calling SIP terminal or the called SIP terminal is configured to be charged for the calling terminal.

### Brief Description of the Drawings

Figure 1 is a flow chart illustrating a method for implementing a REV service in Case A according to an embodiment of the prior art.

Figure 2 is a flow chart illustrating a method for implementing a REV service in Case A according to an embodiment of the prior art.

Figure 3 is a flow chart illustrating a method for implementing a REV service in Case B according to an embodiment of the prior art.

Figure 4 is a flow chart illustrating a method for implementing a REV service in Case B according to an embodiment of the prior art.

Figure 5 is a flow chart illustrating a method for implementing a REV service in Case C according to an embodiment of the prior art.

Figure 6 is a flow chart illustrating a method for implementing a REV service in Case C according to an embodiment of the prior art.

Figure 7 is a schematic diagram illustrating the structure of a system for implementing a REV service in a packet network according to an embodiment of the present invention.

Figure 8 is a schematic diagram illustrating the structure of a system for implementing a REV service in a packet network according to an embodiment of the present invention.

Figure 9 is a flow chart illustrating a method for implementing a REV service in a packet telecommunication network according to a first embodiment of the present invention.

Figure 10 is a flow chart illustrating a method for implementing a REV service in a packet telecommunication network according to a second embodiment of the present invention.

Figure 11 is a flow chart illustrating a method for implementing a REV service in a packet telecommunication network according to a third embodiment of the present invention.

Figure 12 is a flow chart illustrating a method for implementing a REV service in a packet telecommunication network according to a fourth embodiment of the present invention.

Figure 13 is a flow chart illustrating a method for implementing a REV service in a packet telecommunication network according to a fifth embodiment of the present invention.

Figure 14 is a flow chart illustrating a method for implementing a REV service in a packet telecommunication network according to a sixth embodiment of the present invention.

Figure 15 is a flow chart illustrating a method for implementing a REV service in a packet telecommunication network according to a seventh embodiment of the present invention.

Figure 16 is a flow chart illustrating a method for implementing a REV service in a packet telecommunication network according to an eighth embodiment of the present invention.

Figure 17 is a flow chart illustrating a method for implementing a REV service in a packet telecommunication network according to a ninth embodiment of the present invention.

Figure 18 is a flow chart illustrating a method for implementing a REV service in a packet telecommunication network according to a tenth embodiment of the present invention.

Figure 19 is a flow chart illustrating a method for implementing a REV service in a packet telecommunication network according to an eleventh embodiment of the present invention.

Figure 20 is a flow chart illustrating a method for implementing a REV service in a packet telecommunication network according to a twelfth embodiment of the present invention.

Figure 21 is a flow chart illustrating a method for implementing a REV service according to a thirteenth embodiment of the present invention.

Figure 22 is a flow chart illustrating a method for implementing a REV service according to a fourteenth embodiment of the present invention.

Figure 23 is a flow chart illustrating a method for implementing a REV service according to a fifteenth embodiment of the present invention.

Figure 24 is a flow chart illustrating a method for implementing a REV service according to a sixteenth embodiment of the present invention.

Figure 25 is a flow chart illustrating a method for implementing a REV service according to a seventeenth embodiment of the present invention.

Figure 26 is a flow chart illustrating a method for implementing a REV service according to an eighteenth embodiment of the present invention.

Figure 27 is a flow chart illustrating a method for implementing a REV service according to a nineteenth embodiment of the present invention.

Figure 28 is a flow chart illustrating a method for implementing a REV service according to a twentieth embodiment of the present invention.

### Detailed Description of the Embodiments

The embodiments of the present invention provide a system for implementing a REV service in a packet network, as shown in Figure 7. Figure 7 is a schematic diagram illustrating the structure of a system for implementing the REV service in the packet network according to the present invention. The system includes Call Session Control Units 101, the call session control units interact, via a message, with each other via an E2 interface; a Call Session Control Unit 101 interacts, via a message, via an E1 interface with a SIP Terminal 100 managed by the Call Session Control Unit 101, with a REV Service Control Unit 102 via an E3 interface and with a charging processing module via an E7 interface; the REV Service Control Unit 102 may also interact, via a message, with the charging processing module via an E7 interface.

The Call Session Control Unit 101 provides call control and routing function for the SIP Terminal 100 managed by the Call Session Control Unit 101 and triggers call sessions to different service control units for the managed SIP terminal 100, e.g., the REV service control unit. The E2 interface between two Call Session Control Units 101 adopts SIP.

The service control unit provides varieties of service logic control functions, e.g., the REV Service Control Unit 102 in the embodiment of the present invention provides a REV service logic control function. When the REV Service Control Unit 102 and the Call Session Control Unit 101 are separate network entities, the E3 interface between the REV Service Control Unit 102 and the Call Session Control Unit 101 adopts SIP; when the REV Service Control Unit 102 and the Call Session Control Unit 101 are integrated into one network entity, the E3 interface between the REV Service Control Unit 102 and the Call Session Control Unit 101 adopts SIP or is a customized internal interface.

The Charging Processing Module 103 collects charging information from a charging trigger unit, generates a Call Data Record (CDR) and implements the charging function. The Charging Processing Module 103 performs charging in either real-time charging (online charging) mode or non real-time charging (offline charging) mode. In the embodiments of the present invention, either a Call Session Control Unit 101 or the REV Service Control Unit 102 may be a charging trigger unit, the interface between the Charging Processing Module 103 and the REV Service Control Unit 102 is an E7 interface adopting Diameter protocol and the interface between the Charging Processing Module 103 and a Call Session Control Unit 101 is an E7 interface adopting SIP or Diameter protocol. The Diameter protocol is an Authentication, Authorization, and Accounting (AAA) protocol.

The SIP Terminal 100 accesses to the Call Session Control Unit 101 via an E1 interface adopting SIP, and other network elements may be arranged between the SIP Terminal 100 and the Call Session Control Unit 101.

In the embodiments of the present invention, the REV service control unit 102 may include a SIP processing module, a REV service logic processing module and a REV notification module.

The SIP processing module interacts with the Call Session Control Unit 101 and the REV service logic processing module respectively via a message, the SIP processing module is configured to achieve the function of the interface between the SIP processing module and the Call Session Control Unit 101. The SIP processing module receives a SIP message from the Call Session Control Unit 101, parses the SIP message and sends the parsed SIP message to the REV service logic processing module, or the SIP processing module generates a SIP message according to the processing result from the REV service logic processing module and sends the SIP message to the Call Session Control Unit 101.

The REV service logic processing module interacts with the SIP processing module and the REV notification module respectively via a message, performs logic process according to the parsed SIP message received from the SIP processing module and user REV subscription information, and notifies the SIP processing module and the REV notification module of the processing result.

The REV notification module interacts with the REV service logic processing module and the charging processing module respectively via a message, sends charging information to the Charging Processing Module 103 upon receipt of the notification from the REV service logic processing module. The REV service control unit 102 may further receive the charging information from the Charging Processing Module 103.

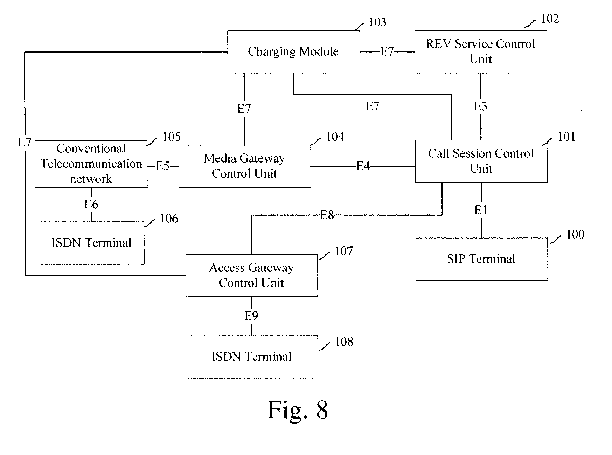

In the embodiments of the present invention, for supporting the access of a conventional circuit switched domain terminal to the packet telecommunication network, the system further includes, as shown in Figure 8, Access Gateway Control Unit 107 and a conventional circuit switched domain terminal managed by the Access Gateway Control Unit 107, shown in Figure 8 as ISDN Terminal 108. The Access Gateway Control Unit 107 interacts with the Call Session Control Unit 101 via a message.

The Access Gateway Control Unit 107 and the Call Session Control Unit 101 may be separate network entities and are communicated with each other via an E8 interface adopting SIP; the Access Gateway Control Unit 107 and the Call Session Control Unit 101 may also be integrated into one network entity and are communicated with each other via an E4 interface adopting SIP or a customized internal interface. The interface between the Access Gateway Control Unit 107 and the conventional circuit switched domain terminal, i.e. ISDN Terminal 108, is an E9 interface adopting DSS1 signaling.

The Access Gateway Control Unit 107 converts a SIP message into a DSS1 message and vice versa. In the embodiments of the present invention, the Access Gateway Control Unit 107 and the conventional circuit switched domain terminal, i.e. ISDN Terminal 108, together complete the functions of the SIP Terminal 100 described above. The functions of the SIP terminal, which to be described hereinafter, may also be achieved by the Access Gateway Control Unit 107 and the conventional circuit switched domain terminal, i.e. ISDN Terminal 108.

Media Gateway Control Unit 104 is communicated with the Charging Processing Module 103 via an E7 interface adopting Diameter protocol.

In the embodiments of the present invention, for implementing the REV service during a call between the SIP terminal in the packet telecommunication network and the terminal in the conventional telecommunication network, the system further includes, as shown in Figure 8, Circuit Switched Telecommunication Network 105 and ISDN Terminal 106 managed by the Circuit Switched Telecommunication Network 105. The Circuit Switched Telecommunication Network 105 interacts, via a message, with the Call Session Control Unit 101 via the Media Gateway Control Unit 104, and the Media Gateway Control Unit 104 is also communicated to the Charging Processing Module 103 via an E7 interface adopting Diameter protocol.

The Media Gateway Control Unit 104 provides interworking control function for the call between the packet telecommunication network and the conventional telecommunication network and converts a SIP message into a circuit message and vice versa. The Media Gateway Control Unit 104 and the Call Session Control Unit 101 may be separate network entities and are communicated with each other via an E4 interface adopting SIP; the Media Gateway Control Unit 104 and the Call Session Control Unit 101 may also be integrated into one network entity and are communicated with each other via an E4 interface adopting SIP or a customized internal interface. The interface between the Media Gateway Control Unit 104 and the Circuit Switched Telecommunication Network 105 is an E5 interface adopting SS7 signaling.

In the embodiments of the present invention, the Media Gateway Control Unit 104 may be a Media Gateway Control Function (MGCF) in the packet telecommunication network.

The Circuit Switched Telecommunication Network 105 and the Terminal 106 managed by the Circuit Switched Telecommunication Network 105 are communicated via an E6 interface adopting DSS1 signaling.

The Access Gateway Control Unit 107 or the Media Gateway Control Unit 104 may convert all or a part of the REV service information carried in a conventional circuit switched domain message into REV service information carried in a SIP message and converts all or a part of REV service information carried in a SIP message into REV service information carried in a conventional circuit switched message. The REV service information carried in the conventional circuit switched domain message may be converted into the REV service information carried in the SIP message by encapsulating or mapping method; the encapsulating method is that: the REV service information carried in the conventional circuit switched domain message is kept unchanged or is converted into a text and is then encapsulated into a SIP message body; the mapping method is that: the parameters of the REV service information carried in the conventional circuit switched domain message are converted into the parameters of the REV service information carried in the SIP message.

The present invention further provides another method for implementing a REV service in the packet telecommunication network, the method includes: the network of a calling terminal sends a SIP message carrying REV information to the network of a called terminal, and the network of the called terminal determines, according to the REV information carried in the SIP message, to apply the REV to the calling terminal or the called terminal; or

the network of a called terminal sends a SIP message carrying REV information to the network of a calling terminal, and the network of the calling terminal determines, according to the REV information carried in the SIP message, to apply the REV to the calling terminal or the called terminal.

The method provided by the present invention may be implemented through any of the following four processes.

The first process: the network of the calling terminal sends a REV request to the network of the called terminal and the network of the called terminal returns a REV response to the network of the calling terminal.

The second process: the network of the calling terminal sends a REV indication to the network of the called terminal.

The third process: the network of the called terminal sends a REV request to the network of the calling terminal and the network of the calling terminal returns a REV response to the network of the called terminal.

The fourth process: the network of the called terminal sends a REV indication to the network of the calling terminal.

In the embodiments of the present invention, the SIP terminal in the packet telecommunication network may subscribe to the REV service, in two different modes: the first is a permanent mode, in which the REV service is applied without request, just as in Case D in the conventional telecommunication network; the second is a provisional mode, in which the REV service is applied upon request, just as in Cases A, B and C in the conventional telecommunication network.

The processes of providing the REV service to the SIP terminal in the packet telecommunication network are explained with reference to the embodiments, and the skilled in the art may obtain how to provide the REV service to the SIP terminal from the embodiments.

The SIP terminal may also be regarded as an access gateway control unit and an ISDN terminal.

It should be noted that the embodiments of the present invention are only used for illustrating the principles of the present invention and neither show complete call and REV service control flows nor include all possible flow branches.

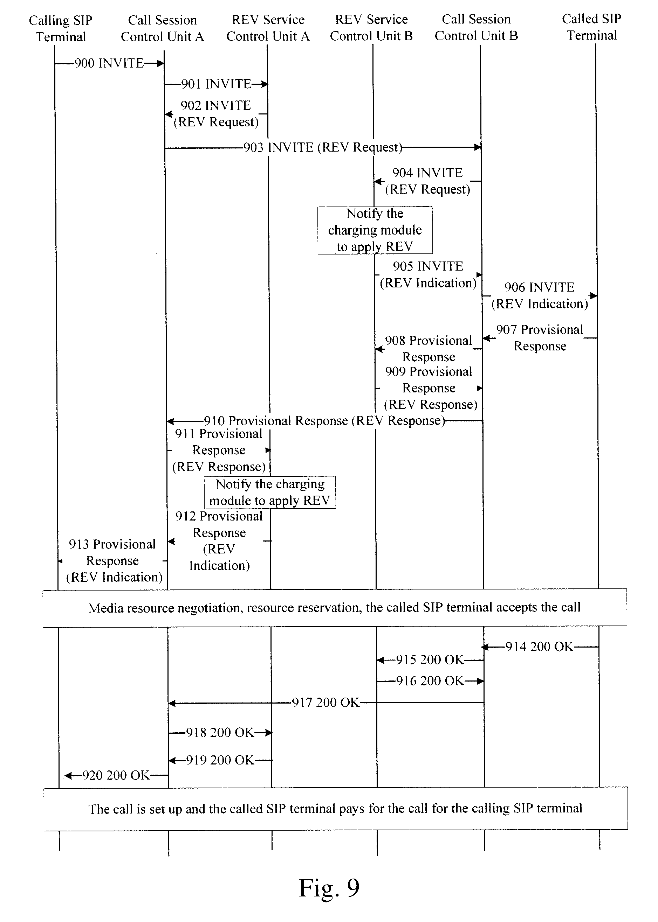

The method shown in Figures 9 to 13 illustrates the first process described above, i.e., the network of the calling terminal sends a REV request to the network of the called terminal and the network of the called terminal returns a REV response to the network of the calling terminal.

Figure 9 is a flow chart illustrating a method for implementing a REV service in a packet telecommunication network according to a first embodiment of the present invention. In this embodiment, the calling terminal and the called terminal are both SIP terminals, the calling SIP terminal subscribes to the REV service in the permanent mode, and the network entities involved in the process include: a calling SIP terminal, a call session control unit A managing the calling SIP terminal, a REV service control unit A that may be triggered by the call session control unit A, a called SIP terminal, a call session control unit B managing the called SIP terminal, and a REV service control unit B that may be triggered by the call session control unit B. The method includes processes as follows.

900: The calling SIP terminal initiates a call and sends a SIP INVITE message to the call session control unit A.

901: The call session control unit A forwards the SIP INVITE message to the REV service control unit A.

902: If the REV service control unit A determines that the calling SIP terminal has subscribed to the REV service in the permanent mode, the SIP INVITE message carries a REV request and is sent to the call session control unit A.

The process that SIP INVITE message carries the REV request includes: a P-REV-Header is carried in a P-REV-Header field of the SIP INVITE: rev-type = rev-request; charging-subscriber = sipuser-A@originatingnetwork.com; where the sipuser-A@originatingnetwork.com is an identification of the calling SIP terminal indicating that the calling SIP terminal is requested to be charged for the call in the REV.

The REV service control unit A may add other parameters into the P-REV-Header field, such as the "transfer mode" for negotiating a charging mode of the REV.

The REV service control unit A may also add the REV request into other SIP messages later in the call, e.g., an INFO message, an UNDATE message, an ACK message and a response message.

903: The call session control unit A forwards the SIP INVITE message carrying the REV request to the call session control unit B.

904: The call session control unit B forwards the SIP INVITE message carrying the REV request to the REV service control unit B.

In this process, the REV service control unit B determines whether the network side of the called SIP terminal supports the REV service; if the network side of the called SIP terminal does not support the REV service, the REV service control unit B rejects the call and sends a rejection message to the call session control unit B, the P-REV-Header field of the rejection message carries a response parameter: P-REV-Header: rev-type = rev-response; error-info = "rejectedByNetwork"; if the network side of the called SIP terminal supports the REV service, the REV service control unit B determines, according to the REV request carried in the SIP INVITE message, that the calling SIP terminal is charged for the call, and notifies the charging processing module in the network of the called SIP terminal that the call is charged to the calling SIP terminal.

The present Diameter protocol message may be extended to transfer the REV request between the REV service control unit B and the charging processing module, e.g., a Reverse-Charging AVP may be added into the Diameter protocol message to carry information indicating whether the REV service is activated and whether the REV is applied to the call, i.e. REV indication information. For example, the value "0" or "No" indicates the REV service is not activated and the call is charged in the present mode; and the value "1" or "Yes" indicates the REV service is activated and the call is charged in the reverse charging mode.

The Diameter protocol message may also be extended in other ways in the embodiment to transfer the REV request, e.g., a Charging-Party-Address AVP may be added into the Diameter protocol message and the value type of the Charging-Party-Address AVP is UTF8String. The Charging-Party-Address AVP indicates an identification of the SIP terminal to be charged, i.e., charging number information.

905: The REV service control unit B sends a SIP INVITE message to the call session control unit B; the SIP INVITE message carries a REV indication instead of the REV request to notify the called SIP terminal that the calling SIP terminal is charged for the call.

The process that the SIP INVITE message carries the REV indication includes: a P-REV-Header is carried in a P-REV-Header field of the SIP INVITE: P-REV-Header: rev-type = rev-indication; charging-subscriber = "sipuser-A@originatingnetwork.com".

The REV service control unit B may also add the REV indication into other SIP messages later in the call, e.g., an INFO message, an UNDATE message, an ACK message and a response message.

906: The call session control unit B forwards the SIP INVITE message carrying the REV indication to the called SIP terminal.

907: The called SIP terminal sends a provisional response to the call session control unit B and starts media resource negotiation with the calling SIP terminal.

The provisional response may be an existing SIP message, e.g., a provisional response 183.

908: The call session control unit B forwards the provisional response to the REV service control unit B.

909: The REV service control unit B adds a REV response into the provisional response to indicate that the REV request from the calling SIP terminal is accepted, and sends the provisional response carrying the REV response to the call session control unit B.

The process that the provisional response carries the REV response includes: a P-REV-Header is carried in a P-REV-Header field of the provisional: P-REV-Header: rev-type = rev-response; charging-subscriber = "sipuser-A@originatingnetwork.com".

The REV service control unit B may also add the REV response into other SIP messages later in the call, e.g., an INFO message, an UNDATE message, an ACK message and a response message.

910: The call session control unit B forwards the provisional response carrying the REV response to the call session control unit A.

911: The call session control unit A forwards the provisional response carrying the REV response to the REV service control unit A and the REV service control unit A determines, according to the REV response carried in the provisional response, whether the network side of the called SIP terminal accepts the REV request. If the network side of the called SIP terminal accepts the REV request, the REV service control unit A notifies the charging processing module in the network of the calling SIP terminal that the call is charged to the calling SIP terminal.

912: The REV service control unit A sends the provisional response to the call session control unit A; the provisional response carries the REV indication instead of the REV request to notify the calling SIP terminal that the calling SIP terminal is charged for the call.

The process that provisional response carries the REV indication includes: a P-REV-Header is carried in a P-REV-Header field of the provisional: rev-type = rev-indication; charging-subscriber = "sipuser-A@originatingnetwork.com".

The REV service control unit A may also add the REV indication into other SIP messages later in the call, e.g., an INFO message, an UNDATE message, an ACK message and a response message.

913: The call session control unit A forwards the provisional response carrying the REV indication to the calling SIP terminal.

914 to 920: The calling SIP terminal and the called SIP terminal complete, according to a conventional method of the packet telecommunication network, such processes as the media resource negotiation and resource reservation, the off-hook of the called SIP terminal, sending a 200 OK message to the calling SIP terminal and the communication between the calling SIP terminal and the called SIP terminal. The call is charged to the calling SIP terminal.

In this embodiment, the existing SIP message needs to be extended by adding the P-REV-Header field into the SIP messages to carry the REV request, the REV indication or the REV response. The P-REV-Header field is defined as follows:

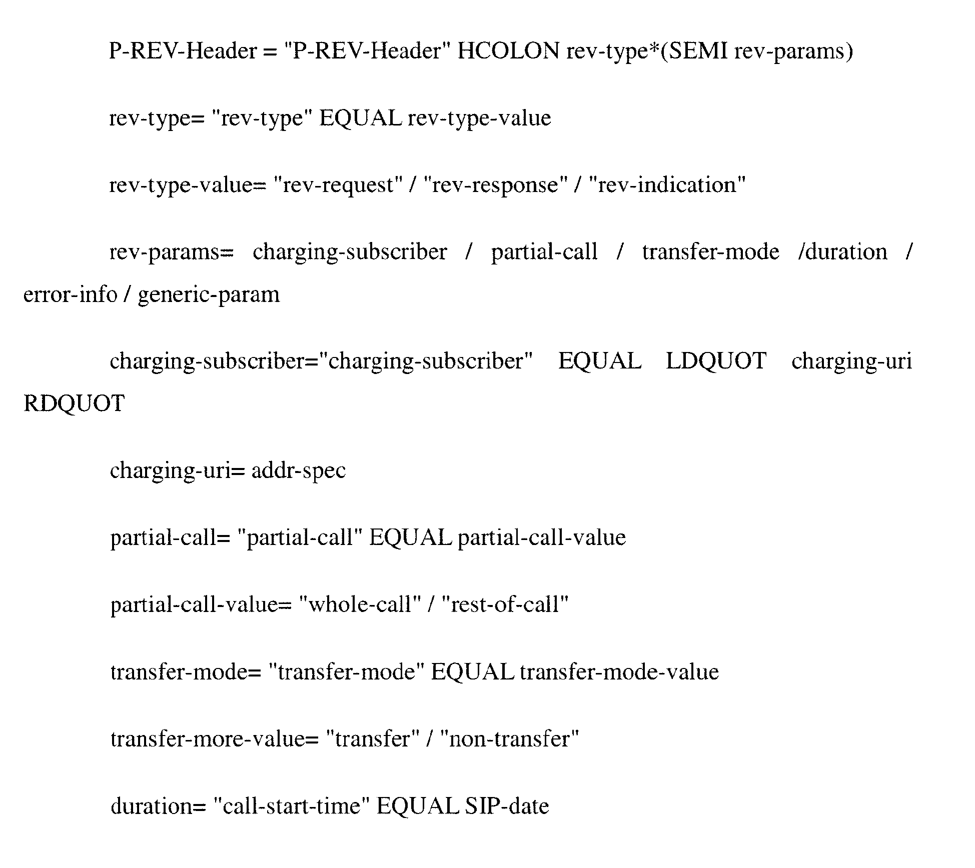

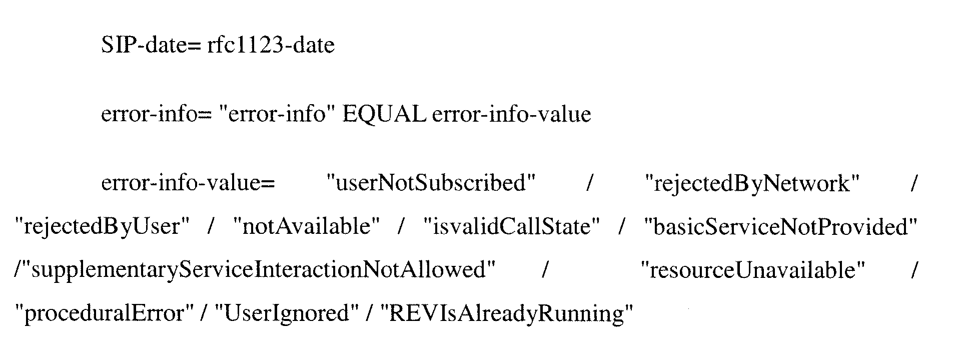

The "rev-type" is a mandatory parameter indicating the REV parameter type and is used for identifying the REV request, the REV response or the REV indication, the REV service control unit does not activate the REV service unless the REV response is sent or received; the "charging-subscriber" is an identification of a REV terminal, i.e., a request URI of the terminal charged in the REV service, the "charging-subscriber" may be an identification of the calling SIP terminal or an identification of the called SIP terminal, and is the identification of the called SIP terminal by default. The "charging-subscriber" is an extension for the REV service demands of the conventional telecommunication network, the "charging-subscriber" not only may be assigned a value by the identification of the calling terminal or by the identification of the called terminal directly, but also may only indicate the calling terminal or the called terminal, e.g., charging-subscriber = "calling" / "called".

The "partial-call" is used to determine the range of the REV, and the REV may be applied to the whole call or the rest part of the call, and the range of the REV is the whole call by default. The "transfer-mode" indicates the charging mode of the REV, either the transfer mode or the non-transfer mode, for the interworking with the conventional telecommunication, and is defined as "non-transfer mode" by default. The "duration" is used for carrying the starting time of the call during the call when the REV is applied to the whole call and the charging mode of the REV is the transfer mode. The "error-info" is used for providing an error code.

The following embodiments all adopt the extension of the SIP message described above.

Other SIP extension modes may also be applied to the existing SIP message in the embodiments of the present invention to enable the SIP message to carry the REV request, the REV indication or the REV response, e.g., a header field may be added into the SIP message when the SIP message carries the REV request, and the header field is defined as follows:

```
        P-REV-Request= "P-REV-Request" HCOLON rev-req-params *(SEMI
rev-req-params)
        rev-req-params= charging-subscriber / partial-call / transfer-mode / duration /
generic-param
        charging-subscriber="charging-subscriber" EQUAL LDQUOT charging-uri
RDQUOT
        partial-call = "partial-call" EQUAL partial-call-value
        partial-call-value= "whole-call" / "rest-of-call"
        transfer-mode= "transfer-mode" EQUAL transfer-mode-value
        transfer-more-value= "transfer" / "non-transfer"
        duration= "call-start-time" EQUAL SIP-date
        SIP-date= rfc1123-date
```

The definitions of the parameters "charging-subscriber", "partial-call", "transfer-mode" and "duration" are the same as the definitions in the preceding embodiment.

When the SIP message carries the REV response, a header field may be added into the SIP message and the header field may be defined as follows:

```
        P-REV-Response= "P-REV-Response" HCOLON rev-rsp-params *(SEMI
rev-rsp-params)
        rev-rsp-params= charging-subscriber / partial-call / transfer-mode / duration /
generic-param
        charging-subscriber="charging-subscriber" EQUAL LDQUOT charging-uri
RDQUOT
        partial-call= "partial-call" EQUAL partial-call-value
        partial-call-value = "whole-call" / "rest-of-call"
        transfer-mode= "transfer-mode" EQUAL transfer-mode-value
        transfer-more-value= "transfer" / "non-transfer"
        duration = "call-start-time" EQUAL SIP-date
        SIP-date= rfc1123-date
```

The definitions of the parameters "charging-subscriber", "partial-call", "transfer-mode" and "duration" are the same as the definitions in the preceding embodiment.

When the SIP message carries the REV indication, a header field may be added into the SIP message and the header field may be defined as follows:

```
        P-REV-Indication= "P-REV-Indication" HCOLON rev-ind-params *(SEMI
rev-ind-params)
        rev-ind-params= charging-subscriber / partial-call / transfer-mode / duration /
generic-param
        charging-subscriber="charging-subscriber" EQUAL LDQUOT charging-uri
RDQUOT
        partial-call= "partial-call" EQUAL partial-call-value
        partial-call-value= "whole-call" / "rest-of-call"
        transfer-mode= "transfer-mode" EQUAL transfer-mode-value
        transfer-more-value= "transfer" / "non-transfer"
        duration= "call-start-time" EQUAL SIP-date
        SIP-date= rfc1123-date
```

The definitions of the parameters "charging-subscriber", "partial-call", "transfer-mode" and "duration" are the same as the definitions in the preceding embodiment.

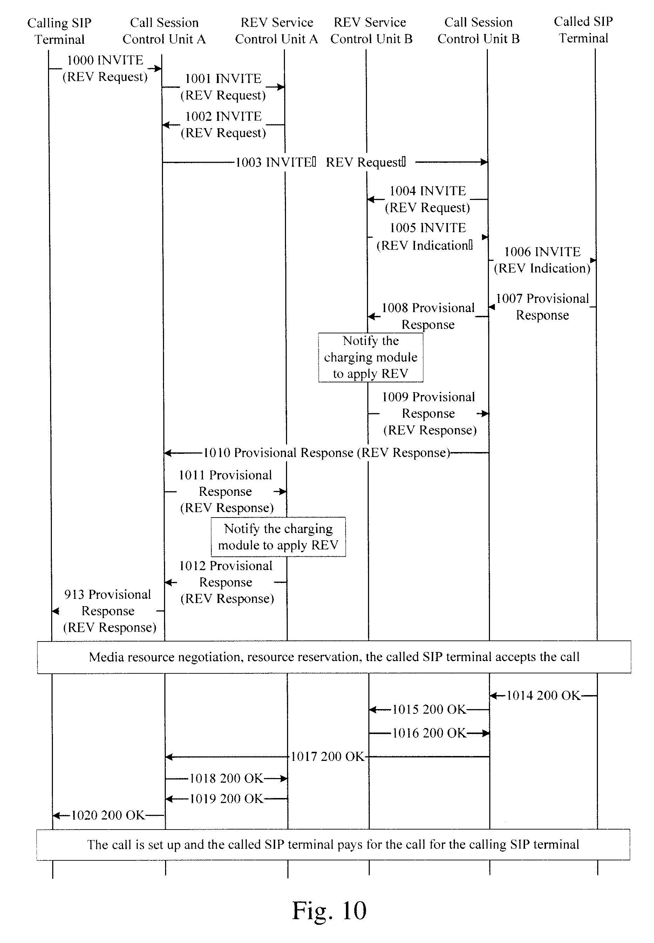

Figure 10 is a flow chart illustrating a method for implementing a REV service in a packet telecommunication network according to a second embodiment of the present invention. In this embodiment, the calling terminal and the called terminal are both SIP terminals, the calling SIP terminal subscribes to the REV service in the provisional mode and the method includes the processes as follows.

1000: The calling SIP terminal initiates a call and sends a SIP INVITE message to the call session control unit A; the SIP INVITE message carries the REV request for activating the REV service temporarily.

The process that SIP INVITE message carries the REV request includes: a P-REV-Header is carried in a P-REV-Header field of the SIP INVITE: rev-type = rev-request; charging-subscriber = sipuser-A@originatingnetwork.com; where the sipuser-A@originatingnetwork.com is an identification of the calling SIP terminal indicating that the calling SIP terminal is requested to be charged for the call.

The REV request may further carry the charging mode, e.g., the transfer mode.

1001: The call session control unit A forwards the SIP INVITE message carrying the REV request to the REV service control unit A.

1002: If the REV service control unit A determines that the calling SIP terminal has subscribed to the REV service in the provisional mode, the REV service control unit A sends the SIP INVITE message carrying the REV request to the call session control unit A.

In this process, if the REV service control unit determines that the calling SIP terminal does not subscribe to the REV service and the subscribed mode is not the provisional mode, the REV service control unit sends a reject SIP INVITE message to the call session control unit A and the call is terminated.

1003: The call session control unit A forwards the SIP INVITE message carrying the REV request to the call session control unit B.

1004: The call session control unit B forwards the SIP INVITE message carrying the REV request to the REV service control unit B.

The REV service control unit B determines whether the network of the called SIP terminal supports the REV. If the network of the called SIP terminal does not support the REV service, the REV service control unit B rejects the call and sends a 4xx reject message carrying the following information in the P-REV-Header field: P-REV-Header: rev-type = rev-response; error-info = "rejectedByNetwork"; if the network side of the called SIP terminal supports the REV service, the REV service control unit B determines, according to the REV request carried in the SIP INVITE message, that the calling SIP terminal requests to pay for the call, and notifies the charging processing module in the network of the called SIP terminal that the call is charged to the calling SIP terminal.

1005: The REV service control unit B sends a SIP INVITE message to the call session control unit B; the SIP INVITE message carries the REV indication instead of the REV request to notify the called SIP terminal that the calling SIP terminal is charged for the call.

The process that SIP INVITE message carries the REV indication includes: a P-REV-Header is carried in a P-REV-Header field of the SIP INVITE : rev-type = rev-indication; charging-subscriber = "sipuser-A@originatingnetwork.com".

The REV service control unit B may also add the REV indication into other messages later in the call, e.g., an INFO message, an UNDATE message, an ACK message and a response message.

1006: The call session control unit B forwards the SIP INVITE message carrying the REV indication to the called SIP terminal.

1007: The called SIP terminal sends a provisional response, e.g., a provisional response 183, to the call session control unit B and starts media resource negotiation with the calling SIP terminal.

1008: The call session control unit B forwards the provisional response to the REV service control unit B.

1009: The REV service control unit B adds a REV response into the provisional response indicating that the REV request from the calling SIP terminal is accepted, and sends the provisional response carrying the REV response to the call session control unit B.

The process that the provisional response carries REV response includes: a P-REV-Header is carried in a P-REV-Header field of the provisional response: P-REV-Header: rev-type = rev-response; charging-subscriber = "sipuser-A@originatingnetwork.com".

The REV service control unit B may also add the REV response into other SIP messages later in the call, e.g., an INFO message, an UNDATE message, an ACK message and a response message.

1010: The call session control unit B forwards the provisional response carrying the REV response to the call session control unit A.

1011: The call session control unit A forwards the provisional response carrying the REV response to the REV service control unit A, and the REV service control unit A determines, according to the REV response carried in the provisional response, whether the network side of the called SIP terminal accepts the REV request. If the network side of the called SIP terminal accepts the REV request, the REV service control unit A notifies the charging processing module in the network of the calling SIP terminal that the call is charged to the calling SIP terminal.

1012: The REV service control unit A sends the provisional response carrying the REV response to the call session control unit A.

1013: The call session control unit A sends the provisional response carrying the REV indication to the calling SIP terminal, and the calling SIP terminal determines, according to the REV indication carried in the provisional response, that the called SIP terminal accepts that the calling SIP terminal is charged for the call.

1014 to 1020: The calling SIP terminal and the called SIP terminal complete, according to a conventional method of the packet telecommunication network, such processes as the media resource negotiation and resource reservation, the off-hook of the called SIP terminal, sending a 200 OK message to the calling SIP terminal, and the communication between the calling SIP terminal and the called SIP terminal. The call is charged to the calling SIP terminal.

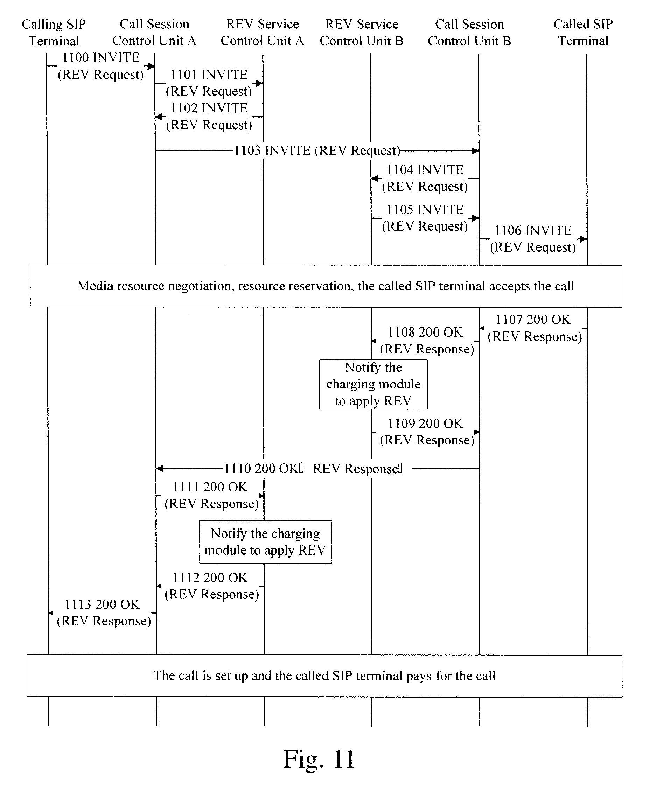

Figure 11 is a flow chart illustrating a method for implementing a REV service in a packet telecommunication network according to a third embodiment of the present invention. In this embodiment, the calling terminal and the called terminal are both SIP terminals, the called SIP terminal subscribes to the REV service in the provisional mode and the method includes the processes as follows.

1100: The calling SIP terminal initiates a call and sends a SIP INVITE message to the call session control unit A; the SIP INVITE message carries a REV request to activate the REV service temporarily.

The process that SIP INVITE message carries the REV request includes: a P-REV-Header is carried in a P-REV-Header field of the SIP INVITE: rev-type = rev-request; charging-subscriber = sipuser-B@originatingnetwork.com; where the "sipuser-B@originatingnetwork.com" is an identification of the called SIP terminal indicating that the called SIP terminal is charged for the call.

1101: The call session control unit A forwards the SIP INVITE message carrying the REV request to the REV service control unit A.

1102: If the REV service control unit A determines that the calling SIP terminal requests the called SIP terminal to pay for the call, the REV service control unit A forwards the SIP INVITE message carrying the REV request to the call session control unit A.

1103: The call session control unit A forwards the SIP INVITE message to the call session control unit B.

1104: The call session control unit B forwards the SIP INVITE message carrying the REV request to the REV service control unit B.

The REV service control unit B determines whether the called SIP terminal subscribes to the REV service in the provisional mode. If the called SIP terminal subscribes to the REV service in the provisional mode, the REV service control unit B forwards the SIP INVITE message; if the called SIP terminal does not subscribe to the REV service in the provisional mode, the REV service control unit B rejects the call and sends a 4xx reject message carrying the following information in the P-REV-Header field: P-REV-Header: rev-type = rev-response; error-info = "userNotSubscribed ".

1105: The REV service control unit B sends the SIP INVITE message carrying the REV request to the call session control unit B.

1106: The call session control unit B forwards the SIP INVITE message carrying the REV request to the called SIP terminal.

The called SIP terminal determines, according to the REV request carried in the SIP INVITE message, that the calling SIP terminal requests the called SIP terminal to pay for the call.

1107: The called SIP terminal and the calling SIP terminal successfully complete the media resource negotiation and resource reservation process, the called SIP terminal is off-hook and sends a 200 OK message to the call session control unit B.

In this call, the called SIP terminal adds the REV response into the 200 OK message to indicate that the called SIP terminal chooses to accept, reject or ignore the REV request from the calling SIP terminal.

If the called SIP terminal accepts the REV request from the calling SIP terminal, the P-REV-Header field of the 200 OK message carries "P-REV-Header: rev-type = rev-request; charging-subscriber = sipuser-B @ terminatingnetwork.com".

If the called SIP terminal rejects the REV request from the calling SIP terminal, the P-REV-Header field of the 200 OK message carries "P-REV-Header: rev-type = rev-response; error-info = "rejectedByUser"".

If the called SIP terminal ignores the REV request from the calling SIP terminal, the P-REV-Header field of the 200 OK message carries "P-REV-Header: rev-type = rev-response; error-info = "UserIgnored"".

1108: The call session control unit B forwards the 200 OK message carrying the REV response to the REV service control unit B.

The REV service control unit B checks the REV response in the 200 OK message; if the REV response indicates that the called SIP terminal accepts the REV request from the calling SIP terminal, the REV service control unit B notifies the charging processing module in the network of the called SIP terminal that the call is charged to the called SIP terminal.

1109: The REV service control unit B forwards the 200 OK message carrying the REV response to the call session control unit B.

1110: The call session control unit B forwards the 200 OK message carrying the REV response to the call session control unit A.

1111: The call session control unit A forwards the 200 OK message carrying the REV response to the REV service control unit A, and the REV service control unit A determines, according to the REV response carried in the 200 OK message, whether the called SIP terminal accepts the REV request from the calling SIP terminal. If the called SIP terminal accepts the REV request, the REV service control unit A notifies the charging processing module in the network of the called SIP terminal that the call is charged to the called SIP terminal.

1112: The REV service control unit A forwards the 200 OK message carrying the REV response to the call session control unit A.

1113: The call session control unit A sends the 200 OK message carrying the REV response to the calling SIP terminal, and the calling SIP terminal obtains, according to the REV response carried in the 200 OK message, that the called SIP terminal agrees to pay for the call.

The call is set up, the calling SIP terminal and the called SIP terminal start communication and the called SIP terminal is charged for the call.

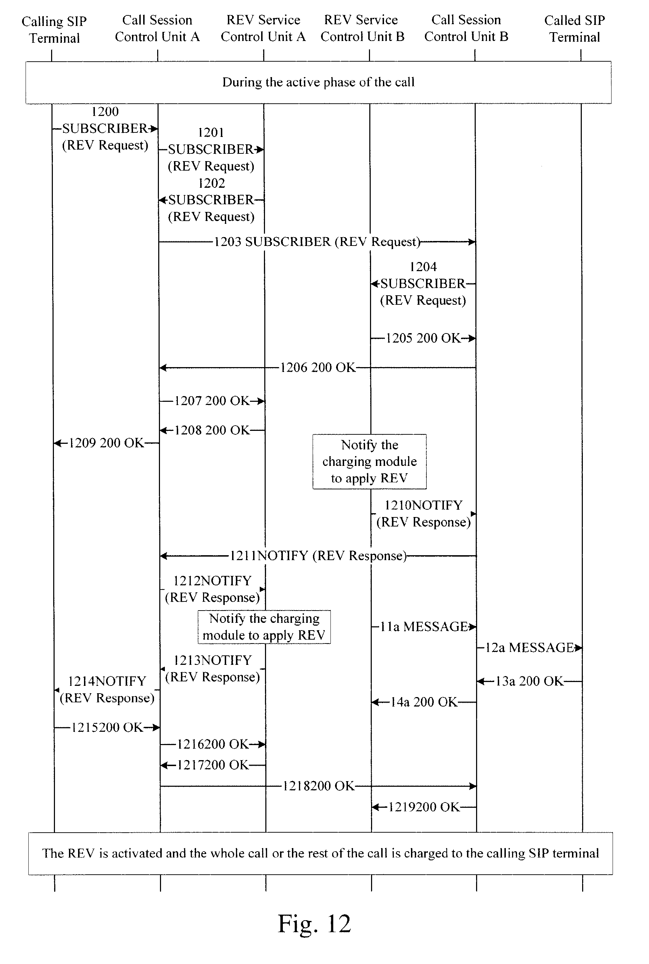

Figure 12 is a flow chart illustrating a method for implementing a REV service in a packet telecommunication network according to a fourth embodiment of the present invention. In this embodiment, the calling terminal and the called terminal are both SIP terminals, the calling SIP terminal subscribes to the REV service in the provisional mode, and the calling SIP terminal requests to pay for the call for the called SIP terminal during the call. The method includes the processes as follows.

1200: The calling SIP terminal and the called SIP terminal have set up a call and during the call between the calling SIP terminal and the called SIP terminal, the calling SIP terminal sends a SIP SUBSCRIBER message to the call session control unit A; the SIP SUBSCRIBER message carries a REV request to activate the REV service temporarily.

The SIP SUBSCRIBER message carries the REV request as: Event: reverse-charging; rev-type = rev-request; charging-subscriber = "sipuser-A@originatingnetwork.com", partial-call = "whole-call"; where the "sipuser-A@originatingnetwork.com" is an identification of the calling SIP terminal indicating that the calling SIP terminal pays for the whole call.

The SIP SUBSCRIBER message may also carry the REV request as: Event: reverse-charging; rev-type = rev-request; charging-subscriber = "sipuser-A@originatingnetwork.com", partial-call = "rest-of-call". The REV request as: Event: reverse-charging; rev-type = rev-request; charging-subscriber = "sipuser-A@originatingnetwork.com", partial-call = "rest-of-call" indicates that the calling SIP terminal pays for the rest of the call.

The REV request may also be transferred in the message body of a SIP message. When the REV request is transferred in the message body of the SIP message, the SUBSCRIBER message and the NOTIFY message may adopts the same message body format or different message body formats.

The REV request may also be carried in the P-REV-Header field, for example, Event: reverse-charging, and a P-REV-Header also be carried in the P-REV-Header field: rev-type = rev-request; charging-subscriber = "sipuser-A@originatingnetwork.com", partial-call = "whole-call"; where the "sipuser-A@originatingnetwork.com" is an identification of the calling SIP terminal indicating that the calling SIP terminal pays for the whole call; or an Event may be carried in the P-REV-Header field: reverse-charging P-REV-Header: rev-type = rev-request; charging-subscriber = "sipuser-A@originatingnetwork.com", partial-call = "rest-of-call". The P-REV-Header field: reverse-charging P-REV-Header: rev-type = rev-request; charging-subscriber = "sipuser-A@originatingnetwork.com", partial-call = "rest-of-call" indicates that the calling SIP terminal pays for the rest of the call.

In the embodiment, not only the SIP SUBSCRIBE message may carry information indicating the REV request via a Event header field, but also the SIP INVITE message may also carry an identification initiating the REV request via a Subscription header field, e.g., Subscription: reverse-charging ; charging-subscriber = "sipuser-A@originatingnetwork.com".

The calling SIP terminal may also add the REV request into other messages, e.g., an INFO message, an UNDATE message, an ACK message and a response message.

1201: The call session control unit A forwards the SIP SUBSCRIBER message carrying the REV request to the REV service control unit A.

1202: The REV service control unit A determines whether the calling SIP terminal subscribes to the REV service in the provisional mode. If the calling SIP terminal subscribes to the REV service in the provisional mode, the REV service control unit A forwards the SIP SUBSCRIBER message to the call session control unit A; if the calling SIP terminal does not subscribe to the REV service in the provisional mode, the REV service control unit A sends a 4xx reject message carrying the following information in the P-REV-Header field to the calling SIP terminal: P-REV-Header: rev-type = rev-response; error-info = "userNotSubscribed ", or the REV service control unit A sends a SIP NOTIFY message carrying the following rejection indication to the calling SIP terminal: Event: reverse-charging; error-info = "userNotSubscribed ", and the rejection indication indicates that the calling SIP terminal does not subscribe to the REV service and the subscribed mode is not the provisional mode.

1203: The call session control unit A forwards the SIP SUBSCRIBER message carrying the REV request to the call session control unit B.

1204: The call session control unit B forwards the SIP SUBSCRIBER message carrying the REV request to the REV service control unit B.

The REV service control unit B determines whether the network of the called SIP terminal supports the REV. If the network of the called SIP terminal does not support the REV, the REV service control unit B rejects the call and sends a 4xx reject message carrying the following information in the P-REV-Header field: P-REV-Header: rev-type = rev-response; error-info = "rejectedByNetwork"; or the REV service control unit B sends a SIP NOTIFY message carrying the following rejection indication to the calling SIP terminal: Event: reverse-charging; error-info = "rejectedByNetwork". If the network of the called SIP terminal supports the REV, the REV service control unit B obtains that the calling SIP terminal requests to pay for the call according to the REV request carried in the SIP SUBSCRIBER message, and then notifies the charging processing module in the network of the called SIP terminal that the call is charged to the calling SIP terminal.

1205 to 1209: The call session control unit B sends a 200 OK message to the calling SIP terminal in response to the SIP SUBSCRIBER message.

1210: The REV service control unit B sends a NOTIFY message carrying the REV response to the call session control unit B, indicating that the REV request from the calling SIP terminal is accepted, the NOTIFY message carries Event: reverse-charging P-REV-Header: rev-type = rev-response; charging-subscriber = "sipuser-A@originatingnetwork.com", partial-call = "whole-call".

1211: The call session control unit B forwards the NOTIFY message carrying the REV response to the call session control unit A.

1212: The call session control unit A forwards the NOTIFY message carrying the REV response to the REV service control unit A, and the REV service control unit A determines, according to the REV response carried in the NOTIFY message, whether the called SIP terminal accepts the REV request. If the called SIP terminal accepts the REV request, the REV service control unit A notifies the charging processing module in the network of the calling SIP terminal that the call is charged to the calling SIP terminal.

1213: The REV service control unit A forwards the NOTIFY message carrying the REV response to the call session control unit A.

1214: The call session control unit A forwards the NOTIFY message carrying the REV response to the calling SIP terminal, and the calling SIP terminal determines, according to the REV response carried in the NOTIFY message, that the called SIP terminal accepts that the calling SIP terminal pays for the whole call or for the rest of the call.

1215 to 1219: The calling SIP terminal sends a 200 OK message to the REV service control unit B in response to the NOTIFY message carrying the REV response.

This embodiment may further include Processes 11a to 14a, in which the REV service control unit B sends a message to the called SIP terminal, notifying the called SIP terminal that the calling SIP terminal pays for the whole call or for the rest of the call.

According to this embodiment, the whole call or the rest of the call may be charged to the calling SIP terminal while both the calling SIP terminal and the called SIP terminal are in the communication.

The existing SIP message needs to be extended so that the SIP SUBSCRIBER message or NOTIFY message carries the REV information. For example, a reverse-charging event package including the following parameters may be added into the SIP SUBSCRIBER message:

```
        rev-params= rev-type / charging-subscriber / partial-call / transfer-mode
 /duration / error-info / generic-param
        rev-type= "rev-type" EQUAL rev-type-value
        rev-type-value= "rev-request" / "rev-response" / "rev-indication"
        charging-subscriber = "charging-subscriber" EQUAL
        LDQUOT charging-uri RDQUOT
               charging-uri = addr-spec
               partial-call = "partial-call" EQUAL partial-call-value
               partial-call-value= "whole-call" / "rest-of-call"
               transfer-mode= "transfer-mode" EQUAL transfer-mode-value
               transfer-more-value = "transfer" / "non-transfer"
               duration = "call-start-time" EQUAL SIP-date
               SIP-date= rfc1123-date
              error-info= "error-info" EQUAL error-info-value
              error-info-value= "userNotSubscribed" / "rejectedByNetwork"
 /"rejectedByUser" / "notAvailable" / "isvalidCallState" / "basicServiceNotProvided"
 /"supplementaryServiceInteractionNotAllowed" / "resourceUnavailable" /
 "proceduralError" /"UserIgnored" / "REVIsAlreadyRunning"
```

The "rev-type" indicates the REV request, the REV response or the REV indication; the "charging-subscriber" is a REV terminal identification; the "partial-call" indicates the range of the REV, and the REV may be applied to the whole call or the rest of the call, and indicates that the REV service is applied to the whole call by default; the "duration" is used for carrying the starting time of the call and the "error-info" indicates the error code.

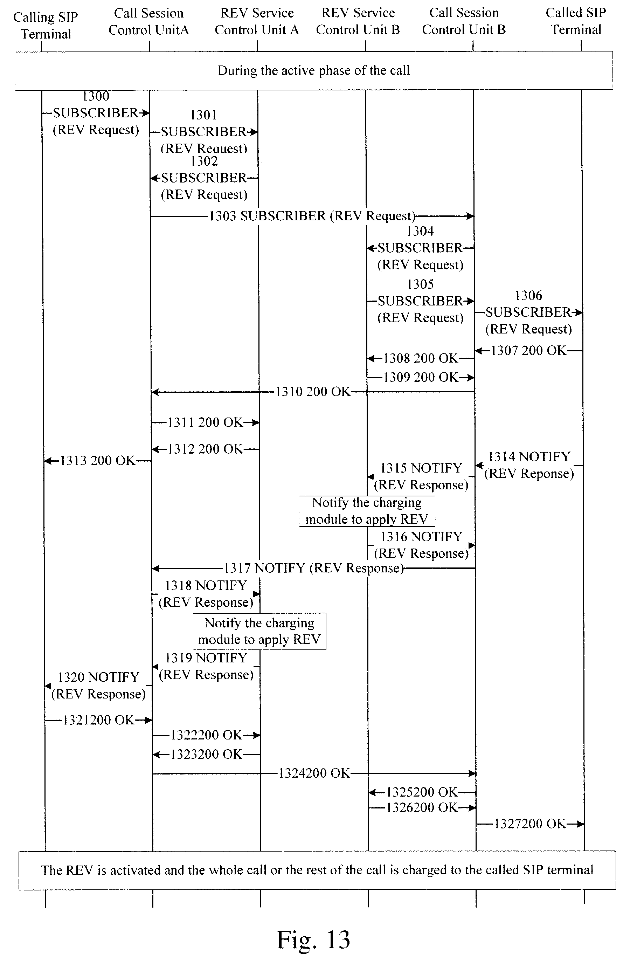

Figure 13 is a flow chart illustrating a method for implementing a REV service in a packet telecommunication network according to a fifth embodiment of the present invention. In this embodiment, the calling terminal and the called terminal are both SIP terminals and the calling SIP terminal requests the called SIP terminal to pay for the call. The method includes the processes as follows.

1300: The calling SIP terminal and the called SIP terminal have set up a call, and during the call between the calling SIP terminal and the called SIP terminal, the calling SIP terminal sends a SIP SUBSCRIBER message carrying a REV request to the call session control unit A, in order to activate the REV service temporarily.

The SIP SUBSCRIBER message carries the REV request as: Event: reverse-charging; rev-type = rev-request; charging-subscriber = "sipuser-B@originatingnetwork.com", partial-call = "whole-call"; where the "sipuser-B@originatingnetwork.com" is an identification of the called SIP terminal indicating that the called SIP terminal pays for the whole call.

The SIP SUBSCRIBER message may also carry the REV request as: Event: reverse-charging; rev-type = rev-request; charging-subscriber = "sipuser-B@originatingnetwork.com", partial-call = "rest-of-call". The REV request as: Event: reverse-charging; rev-type = rev-request; charging-subscriber = "sipuser-B@originatingnetwork.com", partial-call = "rest-of-call" indicates that the called SIP terminal pays for the rest of the call.

The calling SIP terminal may also add the REV request into other messages, e.g., an INFO message, an UNDATE message, an ACK message and a response message.

1301: The call session control unit A forwards the SIP SUBSCRIBER message carrying the REV request to the REV service control unit A.

1302: If the REV service control unit A determines, according to the REV request carried in the SIP SUBSCRIBER message, that the calling SIP terminal requests the called SIP terminal to pay for the call, the REV service control unit A forwards the SIP SUBSCRIBER message carrying the REV request to the call session control unit A.

1303: The call session control unit A forwards the SIP SUBSCRIBER message carrying the REV request to the call session control unit B.

1304: The call session control unit B forwards the SIP SUBSCRIBER message carrying the REV request to the REV service control unit B.

The REV service control unit B determines whether the called SIP subscribes to the REV during the active phase of the call; if the called SIP subscribes to the REV service, the REV service control unit B forwards the SIP SUBSCRIBER message carrying the REV request to the call session control unit B; if the called SIP does not subscribe to the REV service, the REV service control unit B rejects the SIP SUBSCRIBER message carrying the REV request and sends a 4xx reject message carrying the following information in the P-REV-Header field: P-REV-Header: rev-type = rev-response; error-info = "userNotSubscribed ".

1305: The REV service control unit B forwards the SIP SUBSCRIBER message carrying the REV request to the call session control unit B.

1306: The call session control unit B forwards the SIP SUBSCRIBER message carrying the REV request to the called SIP terminal, and the called SIP terminal determines, according to the REV request carried in the SIP SUBSCRIBER message, that the calling SIP terminal requests the called SIP terminal to pay for the whole call or for the rest of the call.

1307 to 1313: The called SIP terminal sends a 200 OK message to the calling SIP terminal in response to the SIP SUBSCRIBER message carrying the REV request.

1314: The called SIP terminal chooses to accept, ignore or reject the REV request from the calling SIP terminal, and sends a NOTIFY message carrying the REV response to the call session control unit B.

If the called SIP terminal accepts the REV request from the calling SIP terminal, the NOTIFY message includes: Event: reverse-charging P-REV-Header: rev-type = rev-request; charging-subscriber = "sipuser-B@terminatingnetwork.com", partial-call = "whole-call".

If the called SIP terminal rejects the REV request from the calling SIP terminal, the NOTIFY message includes: Event: reverse-charging P-REV-Header: rev-type = rev-response; error-info = "rejectedByUser".

If the called SIP terminal ignores the REV request from the calling SIP terminal, the NOTIFY message includes: Event: reverse-charging P-REV-Header: rev-type = rev-response; error-info = "UserIgnored".

1315: The call session control unit B forwards the NOTIFY message carrying the REV response to the REV service control unit B.

The REV service control unit B determines, according to the REV response carried in the NOTIFY message, that the called SIP terminal accepts the REV request from the calling SIP terminal, and the REV service control unit B notifies the charging processing module in the network of the called SIP terminal that the call is charged to the called SIP terminal.

1316: The REV service control unit B forwards the NOTIFY message carrying the REV response to the call session control unit B.

1317: The call session control unit B forwards the NOTIFY message carrying the REV response to the call session control unit A.

1318: The call session control unit A forwards the NOTIFY message carrying the REV response to the REV service control unit A, and the REV service control unit A determines, according to the REV response carried in the NOTIFY message, whether the called SIP terminal accepts the REV request. If the called SIP terminal accepts the REV request, the REV service control unit A notifies the charging processing module in the network of the calling SIP terminal that the call is charged to the called SIP terminal.

1319: The REV service control unit A forwards the NOTIFY message carrying the REV response to the call session control unit A.

1320: The call session control unit A forwards the NOTIFY message carrying the REV response to the calling SIP terminal, and the calling SIP terminal obtains, according to the REV response carried in the NOTIFY message, that the called SIP terminal agrees to pay for the whole call or for the rest of the call.

1321 to 1327: The calling SIP terminal sends a 200 OK message to called SIP terminal in response to the NOTIFY message carrying the REV response.

According to this embodiment, the whole call or the rest of the call may be charged to the called SIP terminal while the calling SIP terminal and the called SIP terminal are in the communication.

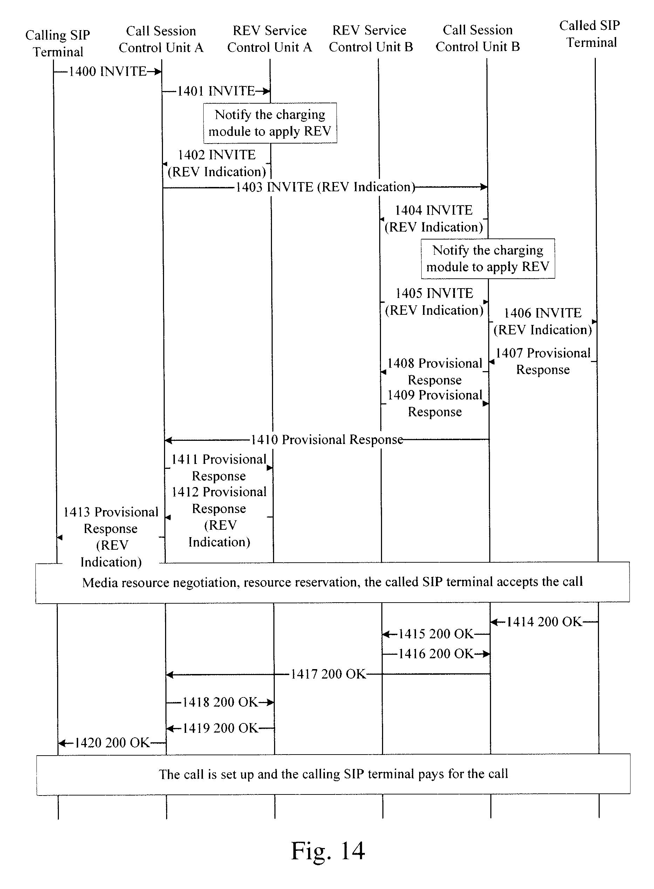

Figure 14 illustrates the second process of implementing the method of the present invention, in which the network of the calling terminal sends a REV indication to the network of the called terminal.

Figure 14 is a flow chart illustrating a method for implementing a REV service in a packet telecommunication network according to a sixth embodiment of the present invention. In this embodiment, the calling terminal and the called terminal are both SIP terminals, the calling SIP terminal subscribes to the REV service in the permanent mode and the calling SIP terminal requests the REV. The method includes the processes as follows.

1400: The calling SIP terminal initiates a call and sends a SIP INVITE message to the call session control unit A.

1401: The call session control unit A forwards the SIP INVITE message to the REV service control unit A.

1402: The REV service control unit A determines whether the calling SIP subscribes to the REV service in the permanent mode; if the calling SIP subscribes to the REV service in the permanent mode, REV service control unit A notifies the charging processing module in the network of the calling SIP terminal that the call is charged to the calling SIP terminal and the REV service control unit A adds the REV indication into the SIP INVITE message and forwards the SIP INVITE message carrying the REV indication to the call session control unit A; if the calling SIP does not subscribe to the REV service in the permanent mode, the REV service control unit A sends a rejection message to the call session control unit A.

The REV service control unit A may also add the REV indication into other SIP messages later in the call, e.g., an INFO message, an UNDATE message, an ACK message and a response message.

The SIP INVITE message carries the REV indication as: P-REV-Header: rev-type = rev-indication; charging-subscriber = sipuser-A@originatingnetwork.com; where the sipuser-A@originatingnetwork.com is an identification of the calling SIP terminal indicating that the calling SIP terminal pays for the call.

The REV service control unit A may add other parameters into the SIP INVITE message, such as the "transfer mode" for negotiating the charging mode of the REV.

1403: The call session control unit A forwards the SIP INVITE message carrying the REV indication to the call session control unit B.

1404: The call session control unit B forwards the SIP INVITE message carrying the REV indication to the REV service control unit B.

The REV service control unit B determines, according to the REV indication carried in the SIP INVITE message, that the calling SIP terminal pays for the call, and notifies the charging processing module in the network of the called SIP terminal that the call is charged to the calling SIP terminal.

1405: The REV service control unit B sends the SIP INVITE message carrying the REV indication to the call session control unit B to notify the called SIP terminal that the calling SIP terminal pays for the call.

The REV service control unit B may also add the REV indication into other SIP messages later in the call, e.g., an INFO message, an UNDATE message, an ACK message and a response message.

1406: The call session control unit B forwards the SIP INVITE message carrying the REV indication to the called SIP terminal.

1407: The called SIP terminal sends a provisional response 183 to the call session control unit B and starts media resource negotiation with the calling SIP terminal.

1408: The call session control unit B forwards the provisional response 183 to the REV service control unit B.

1409: The REV service control unit B forwards the provisional response 183 to the call session control unit B.

1410: The call session control unit B forwards the provisional response 183 to the call session control unit A.

1411: The call session control unit A forwards the provisional response 183 to the REV service control unit A.

1412: The REV service control unit A sends the provisional response 183 to the call session control unit A; the provisional response 183 carries the REV indication to notify the calling SIP terminal that the calling SIP terminal is charged for the call.

The REV service control unit A may also add the REV indication into other SIP messages later in the call, e.g., an INFO message, an UNDATE message, an ACK message and a response message.

1413: The call session control unit A forwards the provisional response 183 carrying the REV indication to the called SIP terminal.

1414 to 1420: The calling SIP terminal and the called SIP terminal complete the media resource negotiation and resource reservation process, the called SIP terminal is off-hook, sends a 200 OK message to the calling SIP terminal, and the calling SIP terminal and the called SIP terminal start communication. The call is charged to the calling SIP terminal.

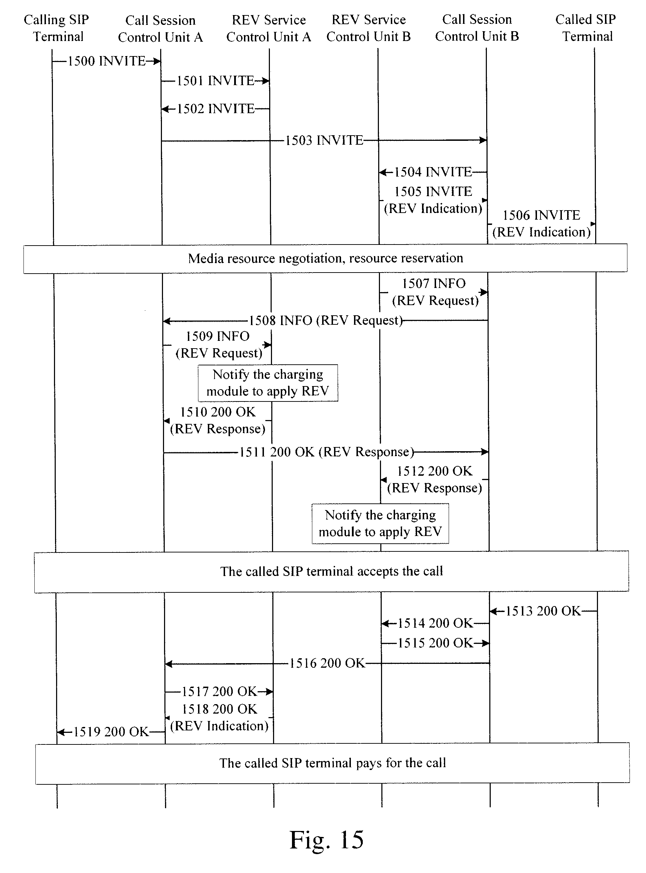

The method shown in Figures 15 to 19 illustrates the third process described above, i.e., the network of the called terminal sends a REV request to the network of the calling terminal and the network of the calling terminal returns a REV response to the network of the called terminal.

Figure 15 is a flow chart illustrating a method for implementing a REV service in a packet telecommunication network according to a seventh embodiment of the present invention. In this embodiment, the calling terminal and the called terminal are both SIP terminals, the called SIP terminal subscribes to the REV service in the permanent mode and the called SIP terminal requests the REV for the call. The method includes the processes as follows.

1500: The calling SIP terminal initiates a call and sends a SIP INVITE message to the call session control unit A.

1501: The call session control unit A forwards the SIP INVITE message to the REV service control unit A.

1502: The REV service control unit A forwards the SIP INVITE message to the call session control unit A.

1503: The call session control unit A forwards the SIP INVITE message to the call session control unit B.

1504: The call session control unit B forwards the SIP INVITE message to the REV service control unit B.

1505: If the REV service control unit B determines that the called SIP terminal subscribes to the REV service in the permanent mode, the REV service control unit B sends the SIP INVITE message carrying the REV indication to the call session control unit B to notify the called SIP terminal that the called SIP terminal is charged for the call.

The SIP INVITE message carries the REV indication in the P-REV-Header field of the SIP INVITE message as: P-REV-Header: rev-type = rev-indication; charging-subscriber = "sipuser-B@terminatingnetwork.com"; where the "sipuser-B@terminatingnetwork.com" is an identification of the called SIP terminal indicating that the called SIP terminal pays for the call.

The REV service control unit B may also add the REV indication into other SIP messages later in the call, e.g., an INFO message, an UNDATE message, an ACK message and a response message.

1506: The call session control unit B forwards the SIP INVITE message carrying the REV indication to the called SIP terminal.

In this process, the calling SIP terminal and the called SIP terminal start the media resource negotiation and resource reservation process and the called SIP terminal rings.

1507: The REV service control unit B sends an INFO message carrying the REV request to the call session control unit B, in order to request the calling SIP terminal that the called SIP terminal pays for the call.

The process that the INFO message carries the REV request includes: a P-REV-Header is carried in the P-REV-Header field of the INFO message: P-REV-Header: rev-type = rev-request; charging-subscriber = "sipuser-B@terminatingnetwork.com".

The REV service control unit B may also add the REV request into other SIP messages in the call, e.g., an UNDATE message, an ACK message and a response message.

1508: The call session control unit B forwards the INFO message carrying the REV request to the call session control unit A.

1509: The call session control unit A forwards the INFO message carrying the REV request to the REV service control unit A.

The REV service control unit A determines whether the network of the calling SIP terminal supports the REV. If the network of the calling SIP terminal does not support the REV, the REV service control unit A rejects the call and sends a 4xx reject message carrying the following information in the P-REV-Header field: P-REV-Header: rev-type = rev-response; error-info = "rejectedByNetwork"; if the network side of the calling SIP terminal supports the REV service, the REV service control unit A determines, according to the REV request carried in the INFO message, that the called SIP terminal requests to pay for the call, and the REV service control unit A notifies the charging processing module in the network of the calling SIP terminal that the call is charged to the called SIP terminal.

1510: The REV service control unit A sends a response message, i.e. 200 OK message, to the call session control unit A in response to the INFO message carrying the REV request, and the 200 OK message carries the REV response indicating that the REV service control unit A accepts the REV request from the called SIP terminal.

The process that the 200 OK message carries the REV response includes: a P-REV-Header is carried in the P-REV-Header field: P-REV-Header: rev-type = rev-response; charging-subscriber = "sipuser-B@terminatingnetwork.com".

The REV service control unit A may also add the REV response into other SIP messages in the call, e.g., an INFO message, an UNDATE message, an ACK message and other response messages.

1511: The call session control unit A forwards the response message carrying the REV response to the call session control unit B.

1512: The call session control unit B forwards the response message carrying the REV response to the REV service control unit B, and the REV service control unit B determines, according to the REV response carried in the response message, whether the calling SIP terminal accepts the REV request. If the calling SIP terminal accepts the REV request, the REV service control unit B notifies the charging processing module in the network of the called SIP terminal that the call is charged to the called SIP terminal; if the calling SIP terminal does not accept the REV request, the call process proceeds in the normal way without any change.

1513 to 1519: The calling SIP terminal and the called SIP terminal complete the media resource negotiation and resource reservation process, the called SIP terminal is off-hook and sends a 200 OK message to the calling SIP terminal, and the calling SIP terminal and the called SIP terminal start communication. The call is charged to the called SIP terminal.

In this process, the REV service control unit A sends the 200 OK message carrying the REV indication to the calling SIP terminal via the call session control unit A, in order to notify the calling SIP terminal that the called SIP terminal pays for the call.

The process that the 200 OK message carries the REV indication includes: a P-REV-Header is carried in the P-REV-Header field: P-REV-Header: rev-type = rev-indication; charging-subscriber = "sipuser-B@ terminatingnetwork.com".

The REV service control unit A may also add the REV indication into other SIP messages in the call, e.g., an INFO message, an UNDATE message, an ACK message and other response messages.

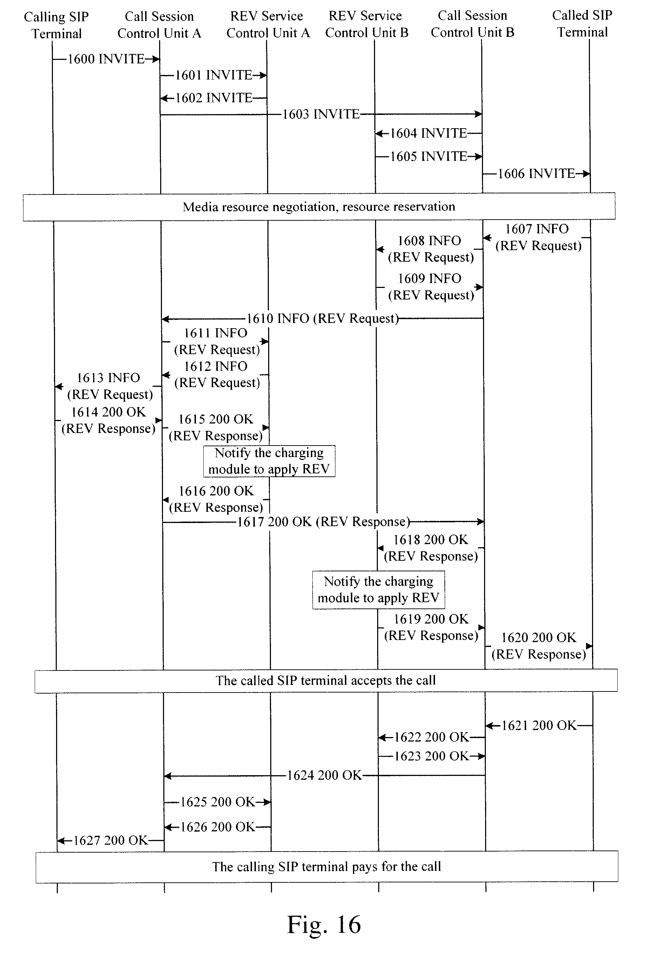

Figure 16 is a flow chart illustrating a method for implementing a REV service in a packet telecommunication network according to an eighth embodiment of the present invention. In this embodiment, the calling terminal and the called terminal are both SIP terminals, the calling SIP terminal subscribes to the REV service in the provisional mode and the method includes the processes as follows.

1600: The calling SIP terminal initiates a call and sends a SIP INVITE message to the call session control unit A.

1601: The call session control unit A forwards the SIP INVITE message to the REV service control unit A.

1602: The REV service control unit A forwards the SIP INVITE message to the call session control unit A.

1603: The call session control unit A forwards the SIP INVITE message to the call session control unit B.

1604: The call session control unit B forwards the SIP INVITE message to the REV service control unit B.

1605: The REV service control unit B forwards the SIP INVITE message to the call session control unit B.

1606: The call session control unit B forwards the SIP INVITE message to the called SIP terminal.

In this process, the calling SIP terminal and the called SIP terminal start the media resource negotiation and resource reservation process and the called SIP terminal rings.

1607: The called SIP terminal sends an INFO message to the call session control unit B; the INFO message carries a REV request to request the calling SIP terminal that the calling SIP terminal to pay for the call.

The process that the INFO message carries the REV request includes: a P-REV-Header is carried in the P-REV-Header field: P-REV-Header: rev-type = rev-request; charging-subscriber = sipuser-A@originatingnetwork.com; where the sipuser-A@originatingnetwork.com is an identification of the calling SIP terminal indicating that the calling SIP terminal is charged for the call.

The REV service control unit B may also add the REV request into other SIP messages in the call, e.g., an UNDATE message, an ACK message and a response message.

1608: The call session control unit B forwards the INFO message carrying the REV request to the REV service control unit B.

1609: The REV service control unit B determines, according to the INFO message carrying the REV request, that the calling SIP terminal is requested to pay for the call, and the REV service control unit B forwards the INFO message carrying the REV request to the call session control unit B.

1610: The call session control unit B forwards the INFO message carrying the REV request to the call session control unit A.

1611: The call session control unit A forwards the INFO message carrying the REV request to the REV service control unit A.

1612: The REV service control unit A determines whether the calling SIP terminal subscribes to the REV service in the provisional mode. If the calling SIP terminal subscribes to the REV service in the provisional mode, the REV service control unit A forwards the INFO message carrying the REV request to the call session control unit A; if the calling SIP terminal does not subscribe to the REV service in the provisional mode, the REV service control unit A sends a 200 OK message in response to the INFO message carrying the REV request; the 200 OK message carries the REV response to indicate that the calling SIP terminal does not subscribe to provisional REV service.

The process that the 200 OK message carries the REV response includes: a P-REV-Header is carried in the P-REV-Header field: P-REV-Header: rev-type = rev-response; error-info = "userNotSubscribed".

1613: The call session control unit A forwards the INFO message carrying the REV request to the calling SIP terminal.

1614: The calling SIP terminal determines, according to the REV request carried in the INFO message, that the called SIP terminal requests the calling SIP terminal to pay for the call, the calling SIP terminal chooses to accept, ignore or reject the REV request and sends a 200 OK message carrying the REV response to the call session control unit A in response to the INFO message carrying the REV request.

If the calling SIP terminal accepts the REV request from the called SIP terminal, the 200 OK message carries the REV response in the P-REV-Header field of the 200 OK message as: P-REV-Header: rev-type = rev-response; charging-subscriber = "sipuser-A@originatingnetwork.com".

If the calling SIP terminal rejects the REV request from the called SIP terminal, the 200 OK message carries the REV response in the P-REV-Header field of the 200 OK message as: P-REV-Header: rev-type = rev-response; error-info = "rejectedByUser".

1615: The call session control unit A forwards the 200 OK message carrying the REV response to the REV service control unit A.

1616: The REV service control unit A forwards the 200 OK message carrying the REV response to the call session control unit A.

The REV service control unit A checks the REV response from the calling SIP terminal, if the calling SIP terminal accepts the REV request from the called SIP terminal, the REV service control unit A notifies the charging processing module in the network of the called SIP terminal that the call is charged to the calling SIP terminal; if the calling SIP terminal ignores the REV request from the called SIP terminal, the REV service control unit A sends a 200 OK message to the call session control unit A in response to the INFO message. The 200 OK message carries the REV response to indicate that the calling SIP terminal ignores the REV request from the called SIP terminal. The 200 OK message carries the REV response in the P-REV-Header field as: P-REV-Header: rev-type = rev-response; error-info = "UserIgnored".

1617: The call session control unit A forwards the 200 OK message carrying the REV response to the call session control unit B.

1618: The call session control unit B forwards the 200 OK message carrying the REV response to the REV service control unit B, and the REV service control unit B determines, according to the REV response carried in the 200 OK message, whether the network of the calling SIP terminal accepts the REV request. If the network of the calling SIP terminal accepts the REV request, the REV service control unit B notifies the charging processing module in the network of the called SIP terminal that the call is charged to the calling SIP terminal.

1619: The REV service control unit B forwards the 200 OK message carrying the SIP response to the call session control unit B.

1620: The call session control unit B forwards the 200 OK message carrying the SIP response to the called SIP terminal, and the called SIP terminal obtains, according to the REV response carried in the 200 OK message, that the network of the calling SIP terminal accepts that the calling SIP terminal is charged for the call.

1621 to 1627: The called SIP terminal is off-hook and sends a 200 OK message to the calling SIP terminal; the calling SIP terminal and the called SIP terminal start communication; and the call is charged to the calling SIP terminal.

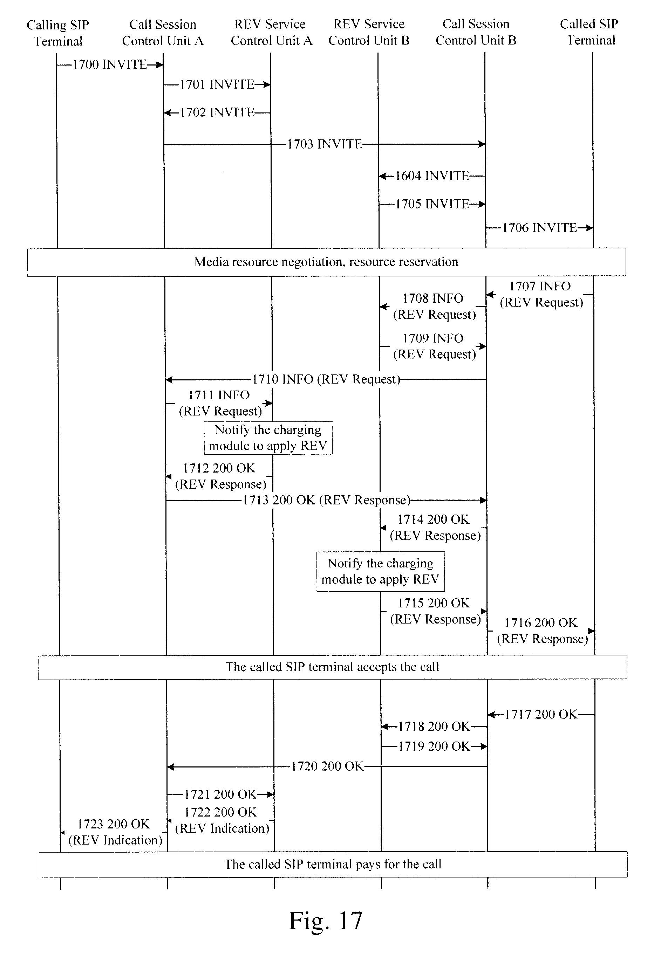

Figure 17 is a flow chart illustrating a method for implementing a REV service in a packet telecommunication network according to a ninth embodiment of the present invention. In this embodiment, the calling terminal and the called terminal are both SIP terminals, the called SIP terminal subscribes to the REV service in the provisional mode and the method includes the processes as follows.

1700: The calling SIP terminal initiates a call and sends a SIP INVITE message to the call session control unit A.

1701: The call session control unit A forwards the SIP INVITE message to the REV service control unit A.

1702: The REV service control unit A forwards the SIP INVITE message to the call session control unit A.

1703: The call session control unit A forwards the SIP INVITE message to the call session control unit B.

1704: The call session control unit B forwards the SIP INVITE message to the REV service control unit B.

1705: The REV service control unit B forwards the SIP INVITE message to the call session control unit B.

1706: The call session control unit B forwards the SIP INVITE message to the called SIP terminal.

In this process, the calling SIP terminal and the called SIP terminal start the media resource negotiation and resource reservation process and the called SIP terminal rings.

1707: The called SIP terminal sends an INFO message carrying a REV request to the call session control unit B, in order to request the calling SIP terminal that the called SIP terminal pays for the call.

The process that the INFO message carries the REV request includes: a P-REV-Header is carried in the P-REV-Header field of the INFO message as: P-REV-Header: rev-type = rev-request; charging-subscriber = "sipuser-B@terminatingnetwork.com"; where the "sipuser-B@terminatingnetwork.com" is an identification of the called SIP terminal indicating that the called SIP terminal pays for the call.

The REV service control unit B may also add the REV request into other SIP messages in the call, e.g., an UNDATE message, an ACK message and a response message.

1708: The call session control unit B forwards the INFO message carrying the REV request to the REV service control unit B.

1709: The REV service control unit B determines whether the called SIP terminal subscribes to the REV service in the provisional mode; if the called SIP terminal subscribes to the REV service in the provisional mode, the REV service control unit B forwards the SIP INVITE message carrying the REV request to the call session control unit B; if the called SIP terminal does not subscribe to the REV service in the provisional mode, the REV service control unit B sends a 200 OK message to the called SIP terminal in response to the INFO message; the 200 OK message carries the REV response as: P-REV-Header: rev-type = rev-response; error-info = "userNotSubscribed".

1710: The call session control unit B forwards the INFO message carrying the REV request to the call session control unit A.

1711: The call session control unit A forwards the INFO message carrying the REV request to the REV service control unit A.

The REV service control unit A determines, according to the REV request carried in the INFO message, that the called SIP terminal requests to pay for the call, and the REV service control unit A notifies the charging processing module in the network of the calling SIP terminal that the call is charged to the called SIP terminal.

1712: The REV service control unit A sends a 200 OK message in response to the INFO message carrying the REV request from the call session control unit A; the 200 OK message carries the REV response indicating that the network of the called SIP terminal accepts the REV request from the calling SIP terminal. The 200 OK message carries the REV response in the P-REV-Header field as: P-REV-Header: rev-type = rev-request; charging-subscriber = "sipuser-B @terminatingnetwork.com".

1713: The call session control unit A forwards the 200 OK message carrying the REV response to the call session control unit B.

1714: The call session control unit B forwards the 200 OK message carrying the REV response to the REV service control unit B and the REV service control unit B determines, according to the REV response carried in the 200 OK message, whether the network of the calling SIP terminal accepts the REV request. If the network of the calling SIP terminal accepts the REV request, the REV service control unit B notifies the charging processing module in the network of the called SIP terminal that the call is charged to the calling SIP terminal.

1715: The REV service control unit B forwards the 200 OK message carrying the REV response to the call session control unit B.

1716: The call session control unit B forwards the 200 OK message carrying the REV response to the called SIP terminal and the called SIP terminal learns, according to the REV response carried in the 200 OK message, that the network of the calling SIP terminal accepts that the call is charged to the calling SIP terminal.

1717 to 1723: The calling SIP terminal and the called SIP terminal complete the media resource negotiation and resource reservation process; the called SIP terminal is off-hook and sends a 200 OK message to the calling SIP terminal; and the calling SIP terminal and the called SIP terminal start communication. The call is charged to the called SIP terminal.

The REV service control unit A adds the REV indication into the 200 OK message to notify the calling SIP terminal that the called SIP terminal pays for the call.

The process that the 200 OK message carries the REV indication includes: a P-REV-Header is carried in the P-REV-Header field of the 200 OK message: P-REV-Header: rev-type = rev-indication; charging-subscriber = "sipuser-B@terminatingnetwork.com".

The REV service control unit A may also add the REV indication into other SIP messages in the call, e.g., an INFO message, an UNDATE message, an ACK message and other response messages.

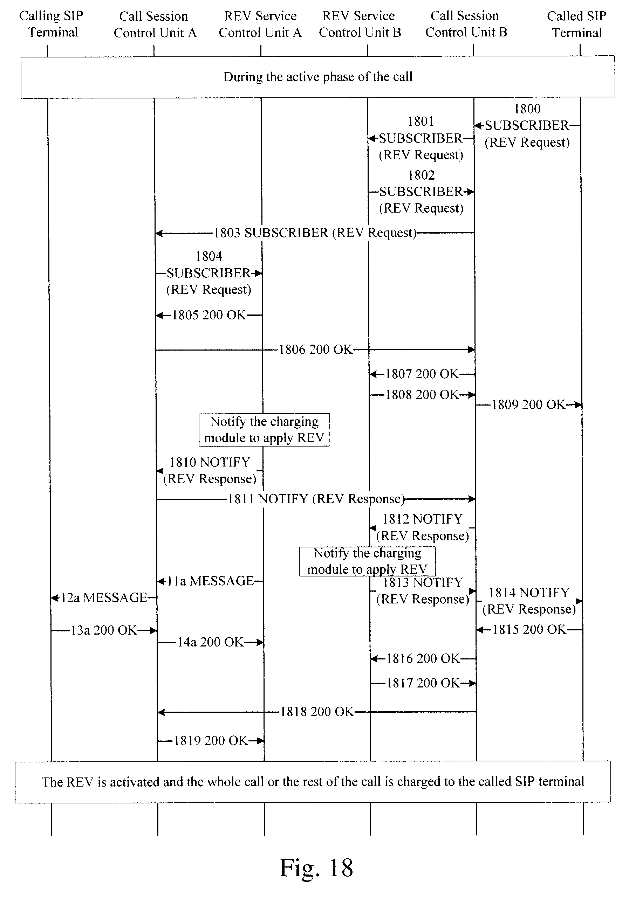

Figure 18 is a flow chart illustrating a method for implementing a REV service in a packet telecommunication network according to a tenth embodiment of the present invention. In this embodiment, the calling terminal and the called terminal are both SIP terminals and the called SIP terminal requests to pay for the call for the calling SIP terminal. The method includes the processes as follows.

1800: The calling SIP terminal and the called SIP terminal have set up a call, and during the call between the calling SIP terminal and the called SIP terminal, the called SIP terminal sends a SIP SUBSCRIBER message carrying the REV request to the call session control unit B, in order to activate the REV service temporarily.

The SIP SUBSCRIBER message carries the REV request as: Event: reverse-charging; rev-type = rev-request; charging-subscriber = "sipuser-B@originatingnetwork.com", partial-call = "whole-call"; where the "sipuser-B@originatingnetwork.com" is an identification of the called SIP terminal indicating that the called SIP terminal pays for the whole call.

The SIP SUBSCRIBER message may also carry the REV request as: Event: reverse-charging; rev-type = rev-request; charging-subscriber = "sipuser-B@originatingnetwork.com", partial-call = "rest-of-call". The REV request as: Event: reverse-charging; rev-type = rev-request; charging-subscriber = "sipuser-B@originatingnetwork.com", partial-call = "rest-of-call" indicates that the called SIP terminal pays for the rest of the call.

The REV request may also be transferred in the message body of a SIP message. If the REV request is transferred in the message body of the SIP message, the SIP SUBSCRIBER message and the NOTIFY message may adopt the same message body format or different message body formats.

The REV request may also be carried in the P-REV-Header field, for example, an Event is carried in the P-REV-Header field: reverse-charging P-REV-Header: rev-type = rev-request; charging-subscriber = "sipuser-B@originatingnetwork.com", partial-call = "whole-call"; where "sipuser-B@originatingnetwork.com" is an identification of the called SIP terminal indicating that the called SIP terminal pays for the whole call; or an Event is carried in the P-REV-Header field: reverse-charging P-REV-Header: rev-type = rev-request; charging-subscriber = "sipuser-B@originatingnetwork.com", partial-call = "rest-of-call". Teverse-charging P-REV-Header: rev-type = rev-request; charging-subscriber = "sipuser-B@originatingnetwork.com", partial-call = "rest-of-call" indicates that the called SIP terminal pays for the rest of the call.

The called SIP terminal may also add the REV request into other messages, e.g., an INFO message, an UNDATE message, an ACK message and a response message.

1801: The call session control unit B forwards the SIP SUBSCRIBER message carrying the REV request to the REV service control unit B.

1802: The REV service control unit B determines whether the called SIP terminal subscribes to the REV service in the provisional mode. If the called SIP terminal subscribes to the REV service in the provisional mode, the REV service control unit B forwards the SIP SUBSCRIBER message to the call session control unit B; if the called SIP terminal does not subscribe to the REV service in the provisional mode, the REV service control unit B sends a 4xx reject message carrying the following information in the P-REV-Header field to the called SIP terminal: P-REV-Header: rev-type = rev-response; error-info = "userNotSubscribed". The following information in the P-REV-Header field to the called SIP terminal: P-REV-Header: rev-type = rev-response; error-info = "userNotSubscribed" indicates that the called IP terminal does not subscribe to the REV service in the provisional mode.

1803: The call session control unit B forwards the SIP SUBSCRIBER message to the call session control unit A.

1804: The call session control unit A forwards the SIP SUBSCRIBER message carrying the REV request to the REV service control unit A.

The REV service control unit A determines whether the network of the calling SIP terminal supports the REV service. If the network of the calling SIP terminal does not support the REV service, REV service control unit A rejects the call and sends a 4xx reject message carrying the following information in the P-REV-Header field: P-REV-Header: rev-type = rev-response; error-info = "rejectedByNetwork"; if the network side of the calling SIP terminal supports the REV service, the REV service control unit A obtains, according to the REV request carried in the SIP SUBSCRIBER message, that the called SIP terminal requests to pay for the call, and notifies the charging processing module in the network of the calling SIP terminal that the call is charged to the called SIP terminal.

1805 to 1809: The call session control unit A sends a 200 OK message to the called SIP terminal in response to the SIP SUBSCRIBER message.

1810: The REV service control unit A sends a NOTIFY message carrying a REV response to the call session control unit A, indicating that the REV service control unit A accepts the REV request from the called SIP terminal, the NOTIFY message includes an Event: reverse-charging P-REV-Header: rev-type = rev-response; charging-subscriber = "sipuser-B@originatingnetwork.com", partial-call = "whole-call", or includes an Event: reverse-charging P-REV-Header: rev-type = rev-response; charging-subscriber = "sipuser-B@originatingnetwork.com", partial-call = "rest-call".

1811: The call session control unit A forwards the NOTIFY message carrying the REV response to the call session control unit B.

1812: The call session control unit B forwards the NOTIFY message carrying the REV response to the REV service control unit B, and the REV service control unit B determines, according to the REV response carried in the NOTIFY message, whether the calling SIP terminal accepts the REV request. If the calling SIP terminal accepts the REV request, the REV service control unit B notifies the charging processing module in the network of the called SIP terminal that the call is charged to the called SIP terminal.

1813: The REV service control unit B forwards the NOTIFY message carrying the REV response to the call session control unit B.

1814: The call session control unit B forwards the NOTIFY message carrying the REV response to the called SIP terminal, and the called SIP terminal determines, according to the REV response carried in the NOTIFY message, that the calling SIP terminal accepts that the called SIP terminal pays for the whole call or for the rest of the call.

1815 to 1819: The called SIP terminal sends a 200 OK message to the REV service control unit A in response to the NOTIFY message carrying the REV response.

This embodiment may further include Processes 11a to 14a, in which the REV service control unit A sends a message to the calling SIP terminal, in order to notify the calling SIP terminal that the called SIP terminal pays for the whole call or for the rest of the call.

According to this embodiment, the whole call or the rest of the call may be charged to the calling SIP terminal while both the calling SIP terminal and the called SIP terminal are in the communication.

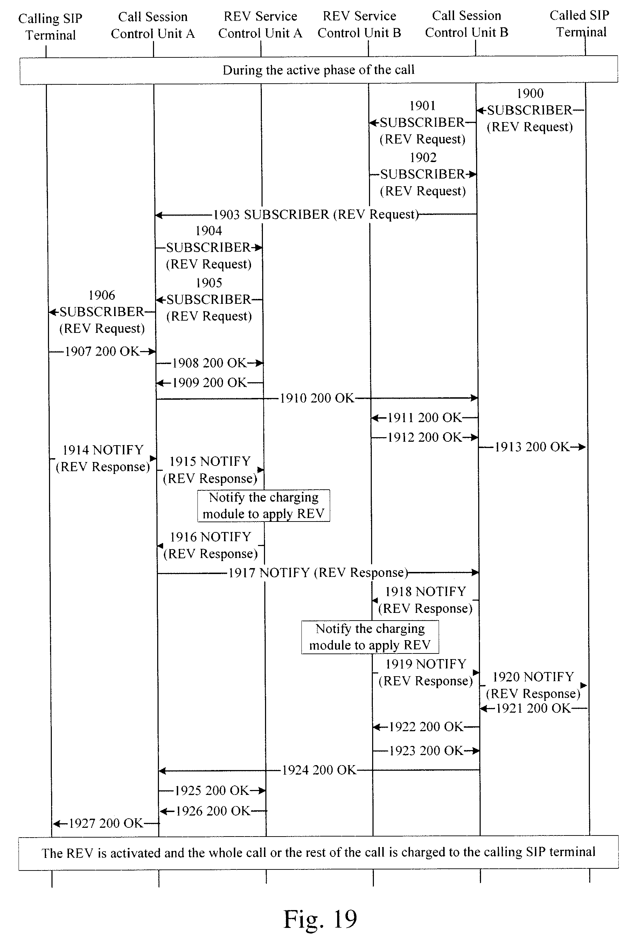

Figure 19 is a flow chart illustrating a method for implementing a REV service packet telecommunication network according to an eleventh embodiment of the present invention. In this embodiment, the calling terminal and the called terminal are both SIP terminals and the called SIP terminal requests the calling SIP terminal to pay for the call. The method includes the processes as follows.

1900: The calling SIP terminal and the called SIP terminal have set up a call, and during the call between the calling SIP terminal and the called SIP terminal, the called SIP terminal sends a SIP SUBSCRIBER message carrying a REV request to the call session control unit B, in order to activate the REV service temporarily.

The SIP SUBSCRIBER message carries the REV request as: Event: reverse-charging; rev-type = rev-request; charging-subscriber = "sipuser-A@originatingnetwork.com", partial-call = "whole-call"; where the "sipuser-A@originatingnetwork.com" is an identification of the calling SIP terminal indicating that the called SIP terminal pays for the whole call.

The SIP SUBSCRIBER message may also carry the REV request as: Event: reverse-charging; rev-type = rev-request; charging-subscriber = "sipuser-A@originatingnetwork.com", partial-call = "rest-of-call". The REV request as: Event: reverse-charging; rev-type = rev-request; charging-subscriber = "sipuser-A@originatingnetwork.com", partial-call = "rest-of-call" indicates that the calling SIP terminal pays for the rest of the call.

The called SIP terminal may also add the REV request into other messages, e.g., an INFO message, an UNDATE message, an ACK message and a response message.

1901: The call session control unit B forwards the SIP SUBSCRIBER message carrying the REV request to the REV service control unit B.

1902: If the REV service control unit B determines, according to the REV request in the SIP SUBSCRIBER message, that the called SIP terminal requests the calling SIP terminal to pay for the call, the REV service control unit B forwards the SIP INVITE message carrying the REV request to the call session control unit B.

1903: The call session control unit B forwards the SIP SUBSCRIBER message carrying the REV request to the call session control unit A.

1904: The call session control unit A forwards the SIP SUBSCRIBER message carrying the REV request to the REV service control unit A.

The REV service control unit A determines whether the called SIP subscribes to the REV service during the active phase of the call; if the called SIP subscribes to the REV service, the REV service control unit A forwards the SIP SUBSCRIBER message carrying the REV request to the call session control unit A; if the called SIP does not subscribe to the REV service, the REV service control unit A rejects the SIP SUBSCRIBER message carrying the REV request and sends a 4xx reject message carrying the following information in the P-REV-Header field to the calling SIP terminal: P-REV-Header: rev-type = rev-response; error-info = "userNotSubscribed".

1905: The REV service control unit A forwards the SIP SUBSCRIBER message carrying the REV request to the call session control unit A.

1906: The call session control unit A forwards the SIP SUBSCRIBER message carrying the REV request to the calling SIP terminal, and the calling SIP terminal determines, according to the REV request carried in the SIP SUBSCRIBER message, that the called SIP terminal requests the calling SIP terminal to pay for the whole call or for the rest of the call.

1907 to 1913: The calling SIP terminal sends a 200 OK message to the called SIP terminal in response to the SIP SUBSCRIBER message carrying the REV request.

1914: The calling SIP terminal chooses to accept, ignore or reject the REV request from the called SIP terminal, and sends a NOTIFY message carrying a REV response to the call session control unit A.

If the calling SIP terminal accepts the REV request from the called SIP terminal, the NOTIFY message includes: Event: reverse-charging P-REV-Header: rev-type = rev-request; charging-subscriber = "sipuser-A@terminatingnetwork.com", partial-call = "whole-call", or includes: Event: reverse-charging P-REV-Header: rev-type = rev-request; charging-subscriber = "sipuser-A@terminatingnetwork.com", partial-call = "rest-call".

If the calling SIP terminal rejects the REV request from the called SIP terminal, the NOTIFY message includes: Event: reverse-charging P-REV-Header: rev-type = rev-response; error-info = "rejectedByUser".

If the calling SIP terminal ignores the REV request from the called SIP terminal, the NOTIFY message includes: Event: reverse-charging P-REV-Header: rev-type = rev-response; error-info = "UserIgnored".

1915: The call session control unit A forwards the NOTIFY message carrying the REV response to the REV service control unit A.

The REV service control unit A determines, according to the REV response carried in the NOTIFY message, that the calling SIP terminal accepts the REV request from the called SIP terminal, then the REV service control unit A notifies the charging processing module in the network of the calling SIP terminal that the call is charged to the calling SIP terminal.

1916: The REV service control unit A forwards the NOTIFY message carrying the REV response to the call session control unit A.

1917: The call session control unit A forwards the NOTIFY message carrying the REV response to the call session control unit B.

1918: The call session control unit B forwards the NOTIFY message carrying the REV response to the REV service control unit B, and the REV service control unit B determines, according to the REV response carried in the NOTIFY message, whether the calling SIP terminal accepts the REV request. If the calling SIP terminal accepts the REV request, the REV service control unit B notifies the charging processing module in the network of the calling SIP terminal that the call is charged to the calling SIP terminal.

1919: The REV service control unit B forwards the NOTIFY message carrying the REV response to the call session control unit B.

1920: The call session control unit B forwards the NOTIFY message carrying the REV response to the called SIP terminal, and the called SIP terminal obtains, according to the REV response carried in the NOTIFY message, that the calling SIP terminal agrees to pay for the whole call or for the rest of the call.

1921 to 1927: The called SIP terminal sends a 200 OK message to calling SIP terminal in response to the NOTIFY message carrying the REV response.

According to this embodiment, the whole call or the rest of the call may be charged to the calling SIP terminal while the called SIP terminal and the calling SIP terminal are in the communication.

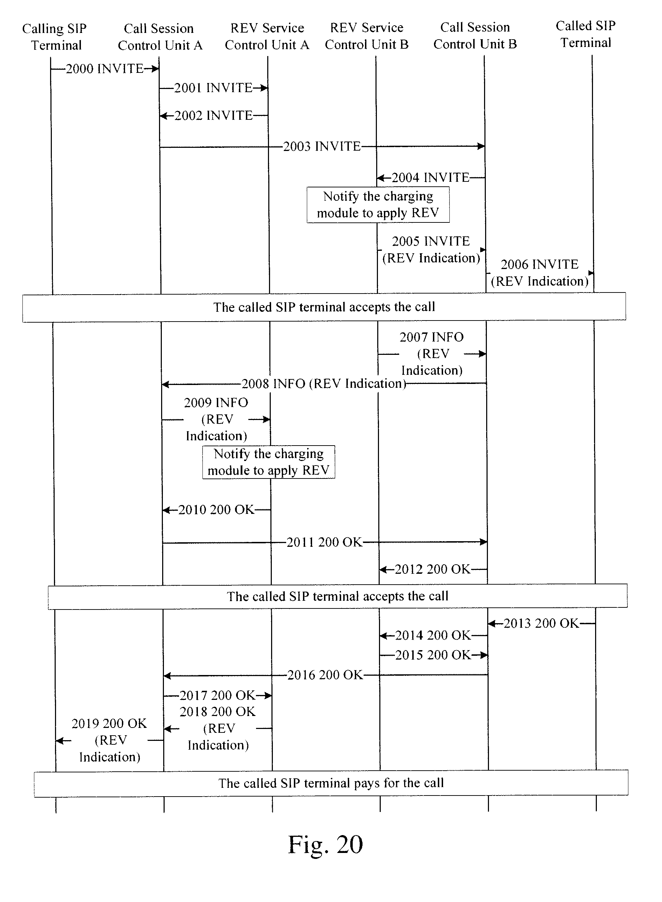

The method shown in Figure 20 illustrates the fourth process described above, in which the network of the called terminal sends a REV indication to the network of the calling terminal.

Figure 20 is a flow chart illustrating a method for implementing a REV service in a packet telecommunication network according to a twelfth embodiment of the present invention. In this embodiment, the calling terminal and the called terminal are both SIP terminals, the called SIP terminal subscribes to the REV service in the permanent mode and the method includes the processes as follows.

2000: The calling SIP terminal initiates a call and sends a SIP INVITE message to the call session control unit A.

2001: The call session control unit A forwards the SIP INVITE message to the REV service control unit A.

2002: The REV service control unit A forwards the SIP INVITE message to the call session control unit A.

2003: The call session control unit A forwards the SIP INVITE message to the call session control unit B.

2004: The REV service control unit B forwards the SIP INVITE message to the call session control unit B.

2005: The REV service control unit B determines whether the called SIP subscribes to the REV service in the permanent mode; if the called SIP subscribes to the REV service in the permanent mode, the REV service control unit B notifies the charging processing module in the network of the called SIP terminal that the call is charged to the called SIP terminal; the REV service control unit B adds a REV indication into the SIP INVITE message and forwards the SIP INVITE message carrying the REV indication to the call session control unit B; if the called SIP does not subscribe to the REV service in the permanent mode, the REV service control unit B sends a rejection message to the call session control unit B.

The REV service control unit B may also add the REV indication into other SIP messages later in the call, e.g., an INFO message, an UNDATE message, an ACK message and a response message.

The SIP INVITE message carries the REV indication as: P-REV-Header: rev-type = rev-indication; charging-subscriber = sipuser-B@originatingnetwork.com; where the "sipuser-B@originatingnetwork.com" is an identification of the called SIP terminal indicating that the called SIP terminal pays for the call.

The REV service control unit B may add other parameters into the SIP INVITE message, such as the "transfer mode" for negotiating the charging mode of the REV service.

2006: The call session control unit B forwards the SIP INVITE message carrying the REV indication to the called SIP terminal.

In this process, the calling SIP terminal and the called SIP terminal start the media resource negotiation and resource reservation process and the called SIP terminal rings.

2007: The REV service control unit B sends an INFO message carrying the REV indication to the call session control unit B, in order to indicate the network of the calling SIP terminal that the called SIP terminal pays for the call.

The process that the INFO message carries the REV indication includes: a P-REV-Header is carried in the P-REV-Header field of the INFO message: P-REV-Header: rev-type = rev-indication; charging-subscriber = "sipuser-B@terminatingnetwork.com".

The REV service control unit B may also add the REV indication into other SIP messages in the call, e.g., an UNDATE message, an ACK message and a response message.

2008: The call session control unit B forwards the INFO message carrying the REV indication to the call session control unit A.

2009: The call session control unit A forwards the INFO message carrying the REV indication to the REV service control unit A.

The REV service control unit A obtains, according to the REV indication in the INFO message, that the called SIP terminal pays for the call, and notifies the charging processing module in the network of the calling SIP terminal that the call is charged to the called SIP terminal.

2010: The REV service control unit A sends a 200 OK message to the call session control unit A in response to the INFO message.

2011: The call session control unit A forwards the 200 OK message to the call session control unit B.

2012: The call session control unit B forwards the 200 OK message to the REV service control unit B.

2013 to 2019: The calling SIP terminal and the called SIP terminal complete the media resource negotiation and resource reservation process; the called SIP terminal is off-hook and sends a 200 OK message to the calling SIP terminal; and the calling SIP terminal and the called SIP terminal start communication. The call is charged to the called SIP terminal.

The REV service control unit A adds the REV indication into the 200 OK message to notify the calling SIP terminal that the called SIP terminal pays for the call.

The process that the 200 OK message carries the REV indication includes: a P-REV-Header is carried in the P-REV-Header field of the 200 OK message: P-REV-Header: rev-type = rev-indication; charging-subscriber = "sipuser-B@terminatingnetwork.com".

The REV service control unit A may also add the REV indication into other SIP messages in the call, e.g., an INFO message, an UNDATE message, an ACK message and other response messages.

In the method provided by the present invention, the REV may be applied to the communication between a terminal in the conventional telecommunication network and a SIP terminal in the packet telecommunication network, which will be described hereinafter with reference to embodiments of the present invention.

A media gateway control unit performs the mapping between a SIP message and an ISDN User Part (ISUP) message to implement the communication between the terminal in the conventional telecommunication network and the SIP terminal in the packet telecommunication network, that is to say, the media gateway control unit needs to store a mapping relation between the SIP messages and the ISUP messages in order to convert a SIP message into an ISUP message and vice versa.

In the embodiments of the present invention, the mapping relations between the SIP messages and the ISUP messages, which are stored in the media gateway control unit, are shown in Table 1.

**Table 1**

| | |
|---|---|
| ISUP Parameter | SIP Parameter |
| transferRequested | transfer-mode |
| transferAccepted | transfer-mode |
| particalCallOnly | partial-call |
| Duration | duration |

The method provided by the embodiment of the present invention for implementing the communication between the terminal in the conventional telecommunication network and the SIP terminal in the packet telecommunication network includes: a circuit switched telecommunication network sends a message carrying REV information to the packet telecommunication network, and the packet telecommunication network determines to apply the REV according to the REV information in the message; or a packet telecommunication network sends a message carrying REV information to a circuit switched telecommunication network, and the circuit switched telecommunication network determines to apply the REV according to the REV information in the message. The present invention is further described with reference to the embodiments.

### Embodiments in Case A

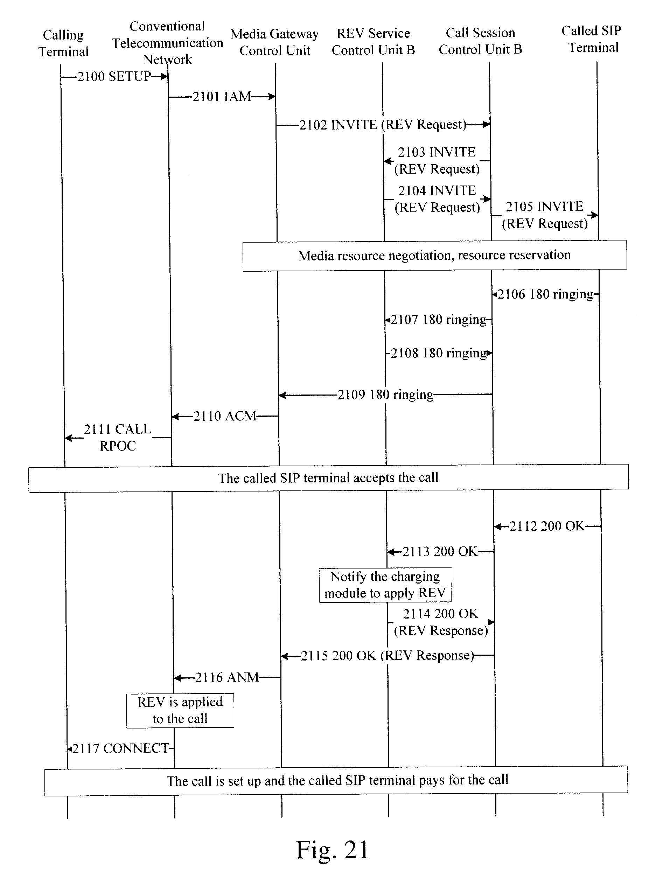

Figure 21 is a flow chart illustrating a method for implementing a REV service according to a thirteenth embodiment of the present invention. In this embodiment, the calling terminal is a terminal in the conventional telecommunication network, the called terminal is a SIP terminal, and the called SIP terminal subscribes to the REV service in the provisional mode and the method includes the processes as follows.

2100: The calling terminal sends a SETUP message in the DSS1 signaling to the conventional telecommunication network, where the SETUP message carries a RequestREV parameter, in order to indicate Case A and that the called SIP terminal pays for the call.

The definition of the RequestREV is given in the ITU-T Q.956.

2101: The conventional telecommunication network checks whether the REV service and the SS7 signaling are supported; if both the REV service and the SS7 signaling are supported, the conventional telecommunication network sends an IAM message in the SS7 signaling to a media gateway control unit; the IAM message carries REVCallingReqSetup and transfer mode.

The definition of the REVCallingReqSetup request parameter is given in the ITU-T Q.736.3.

2102: The media gateway control unit maps the IAM message in the SS7 signaling onto a SIP INVITE message in the SIP signaling, and sends the SIP INVITE message to the call session control unit B; the SIP INVITE message carries a REV request according to the REVCallingReqSetup and transfer mode to request the called SIP terminal to pay for the call in the transfer mode.

The process that SIP INVITE message carries the REV request includes: a P-REV-Header is carried in the P-REV-Header field of the SIP INVITE message : rev-type = rev-request; charging-subscriber = "sipuser-B@terminatingnetwork.com", transfer-mode = "transfer"; where the "sipuser-B@terminatingnetwork.com " is an identification of the called SIP terminal, indicating that the called SIP terminal is requested to pay for the call in the transfer mode.

2103: The call session control unit B forwards the SIP INVITE message carrying the REV request to the REV service control unit B.

The REV service control unit B determines whether the called SIP terminal subscribes to the REV service in the provisional mode. If the called SIP terminal subscribes to the REV service in the provisional mode, the REV service control unit B forwards the SIP INVITE message carrying the REV request to the call session control unit B; if the called SIP terminal does not subscribe to the REV service in the provisional mode, the REV service control unit B rejects the call and sends a 4xx reject message carrying the following information in the P-REV-Header field to the called SIP terminal: P-REV-Header: rev-type = rev-response; error-info = "userNotSubscribed ".

2104: The REV service control unit B forwards the SIP INVITE message carrying the REV request to the call session control unit B.

2105: The call session control unit B forwards the SIP INVITE message carrying the REV request to the called SIP terminal.

The called SIP terminal determines, according to the REV request carried in the SIP INVITE message, that the calling terminal requests the called SIP terminal to pay for the call.

2106 to 2111: After the called SIP terminal and the media gateway control unit successfully complete the media resource negotiation and resource reservation process, the called SIP terminal rings and sends a 180 ringing message to the media gateway control unit via the call session control unit B and the REV service control unit B; the media gateway control unit sends an ACM message in the SS7 signaling to the conventional telecommunication network and the conventional telecommunication network sends a CALL PROC message in the DSS 1 signaling to the calling terminal.

2112: The called SIP terminal accepts the call, chooses to accept, ignore or reject the REV request from the calling terminal and sends a 200 OK message carrying a REV response to the call session control unit B.

If the called SIP terminal accepts the REV request from the calling terminal, the P-REV-Header field of the 200 OK message carries: P-REV-Header: rev-type = rev-request; charging-subscriber = sipuser-B@terminatingnetwork.com.

If the called SIP terminal rejects the REV request from the calling terminal, the P-REV-Header field of the 200 OK message carries: P-REV-Header: rev-type = rev-response; error-info = "rejectedByUser".

If the called SIP terminal ignores the REV request from the calling terminal, the P-REV-Header field of the 200 OK message carries: P-REV-Header: rev-type = rev-response; error-info = "UserIgnored".

2113: The call session control unit B forwards the 200 OK message carrying the REV response to the REV service control unit B.

The REV service control unit B checks the REV response carried in the 200 OK message; if the called SIP terminal accepts the REV request from the calling terminal, the REV service control unit B notifies the charging processing module in the network of the called SIP terminal that the call is charged to the called SIP terminal.

2114: The REV service control unit B forwards the 200 OK message carrying the REV response to the call session control unit B.

2115: The call session control unit B forwards the 200 OK message carrying the REV response to the media gateway control unit.

2116: The media gateway control unit maps the 200 OK message in the SIP signaling onto an ANM in the SS7 signaling, and sends the ANM to the conventional telecommunication network; the ANM carries the REVCallingReqSetup and transfer mode parameters according to the REV response carried in the 200 OK message, in order to notify the network of the calling terminal that the called SIP terminal accepts the REV request.

The conventional telecommunication network receives the ANM, and obtains that the called SIP terminal accepts the REV request and the REV is applied to the call in the transfer mode according to the content of the REVCallingReqSetup.

2117: The conventional telecommunication network sends a CONNECT carrying the RequestREV to the calling terminal, indicating that the network of the calling terminal accepts the REV request from the calling terminal.

The call is set up, the calling terminal and the called SIP terminal start communication and the called SIP terminal is charged for the call.

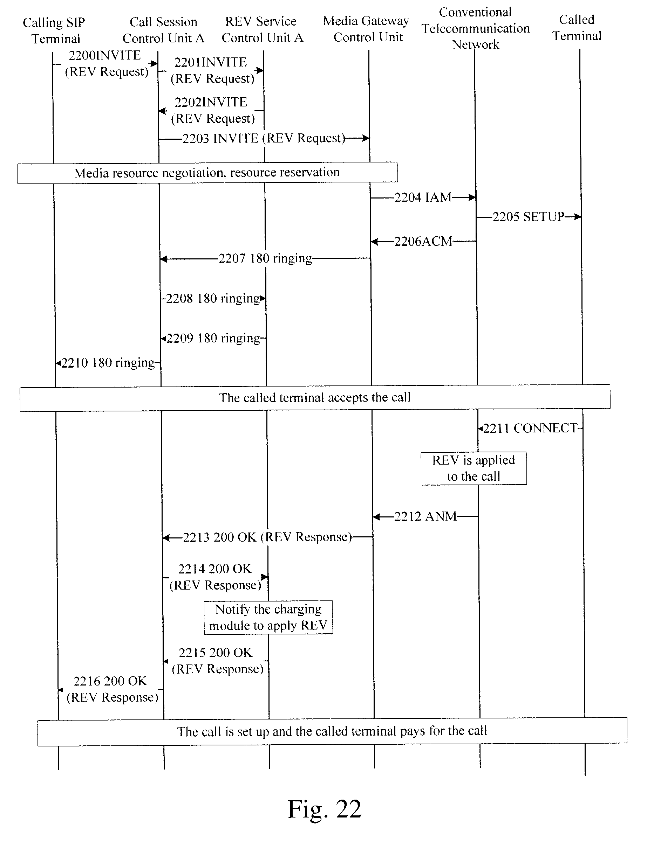

Figure 22 is a flow chart illustrating a method for implementing a REV service according to a fourteenth embodiment of the present invention. In this embodiment, the called terminal is a terminal in the conventional telecommunication network, the calling terminal is a SIP terminal, the called terminal subscribes to the REV service in the provisional mode and the method includes the processes as follows.

2200: The calling SIP terminal initiates a call and sends a SIP INVITE message to the call session control unit A; the SIP INVITE message carries the REV request to activate the REV service temporarily.

The SIP INVITE message carries the REV request as: P-REV-Header: rev-type = rev-request; charging-subscriber = "26540808@isdn.com"; where the "26540808@isdn.com" is an identification of the called terminal, indicating that the called terminal is requested to pay for the call.

2201: The call session control unit A forwards the SIP INVITE message carrying the REV request to the REV service control unit A.

2202: The REV service control unit A checks the REV request carried in the SIP INVITE message; if the calling SIP terminal requests the opposing party to pay for the call, the REV service control unit A forwards the SIP INVITE message to the call session control unit A.

The REV service control unit A may further add the transfer mode into the SIP INVITE message carrying the REV request according to the following method: P-REV-Header: rev-type = rev-request; charging-subscriber = "26540808@isdn.com", transfer-mode = "transfer". The REV request according to the following method: P-REV-Header: rev-type = rev-request; charging-subscriber = "26540808@isdn.com", transfer-mode = "transfer" indicates that the REV service adopts the transfer mode.

2203: The call session control unit A forwards the SIP INVITE message carrying the REV request and the transfer mode to the media gateway control unit.

2204: After the media gateway control unit and the calling SIP terminal successfully complete the media negotiation and the resource reservation process, the media gateway control unit sends an IAM message to the conventional telecommunication network; the IAM message carries the REVCallingReqSetup and transfer mode parameters according to the REV request and the transfer mode carried in the SIP INVITE message to request the called terminal, in order to request the called terminal to pay for the call in the transfer mode.

The definition of the REVCallingReqSetup is given in the ITU-T Q.736.3.

2205: The conventional telecommunication network checks whether the called terminal subscribes to the REV service in Case A; if the called terminal subscribes to the REV service in Case A, the conventional telecommunication network sends a SETUP message carrying the RequestREV to the called terminal, in order to request the called terminal to pay for the call.

The definition of the RequestREV is given in the ITU-T Q.956.

2206 to 2210: The conventional telecommunication network sends an ACM message in the SS7 signaling to the media gateway control unit, and the media gateway control unit maps the ACM message in the SS7 signaling onto a SIP 100 ringing message and sends the SIP 100 ringing message to the calling SIP terminal via the call session control unit A and the REV service control unit A.

2211: The called terminal is off-hook, chooses to accept the REV request from the calling SIP terminal and sends a CONNECT in the DSS1 signaling to the conventional telecommunication network; the CONNECT message carries the RequestREV, indicating that the called terminal accepts the REV request.

The definition of the RequestREV is given in the ITU-T Q.956.

The conventional telecommunication network determines, according to the RequestREV carried in the CONNECT message, whether the called terminal accepts the REV request; if the called terminal accepts the REV request, the REV service is applied to the call according to the transfer mode provided by the calling SIP terminal.

2212: The conventional telecommunication network sends the ANM in the SS7 signaling carrying the REVCallingReqSetup and transfer mode parameters to the media gateway control unit.

2213: The media gateway control unit maps the ANM in the SS7 signaling onto A 200 OK message in the SIP signaling, and sends the 200 OK message to the call session control unit A; the 200 OK message carries the REV response according to the REVCallingReqSetup.

If the called terminal accepts the REV request from the called SIP terminal, the process that the 200 OK message carries the REV response includes: a P-REV-Header is carried in the P-REV-Header field of the 200 OK message: P-REV-Header: rev-type = rev-request; charging-subscriber = "26540808@isdn.com".

If the called terminal does not subscribe to the REV service, the process that the 200 OK message carries the REV response includes: a P-REV-Header is carried in the P-REV-Header field of the 200 OK message: P-REV-Header: rev-type = rev-response; error-info = "userNotSubscribed ".

If the called terminal rejects the REV request from the calling SIP terminal, the 200 OK message carries the REV response as: P-REV-Header: rev-type = rev-response; error-info = "rejectedByUser".

If the called terminal ignores the REV request from the calling SIP terminal, the 200 OK message carries the REV response as: P-REV-Header: rev-type = rev-response; error-info = "UserIgnored".

2214: The call session control unit A forwards the 200 OK message carrying the REV response to the REV service control unit A, and the REV service control unit A determines, according to the REV response carried in the 200 OK message, whether the network side of the called terminal accepts the REV request. If the network side of the called terminal accepts the REV request, the REV service control unit A notifies the charging processing module in the network of the called SIP terminal that the call is charged to the called terminal.

2215: The REV service control unit A forwards the 200 OK message carrying the REV response to the call session control unit A.

2216: The call session control unit A deletes the transfer mode from the 200 OK message and forwards the 200 OK message to the calling SIP terminal; the calling SIP terminal obtains, according to the REV response carried in the 200 OK message, that the network of the called terminal accepts the REV request from the calling SIP terminal.

The call is thus set up, the calling SIP terminal and the called terminal start communication and the called terminal is charged for the call.

Embodiments in Case B in which the calling terminal requests REV are described as follows.

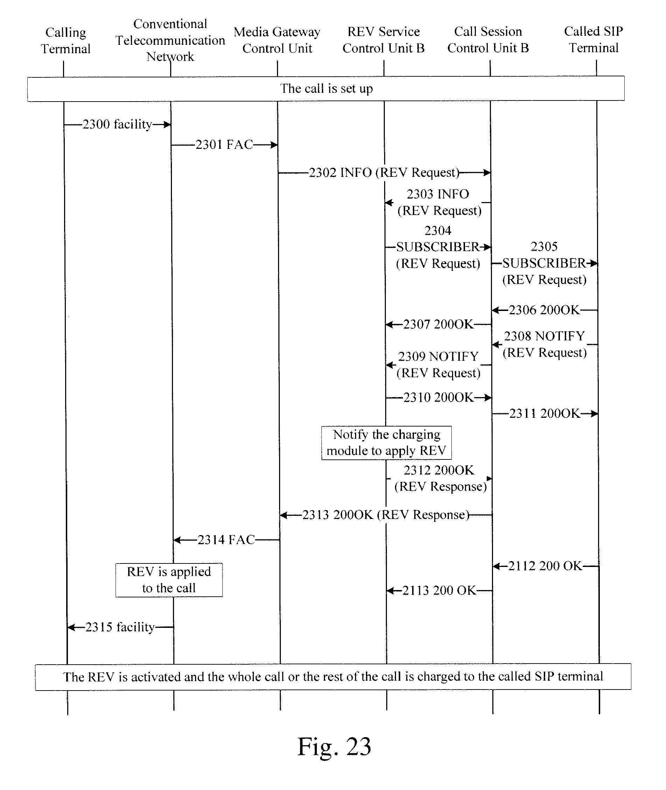

Figure 23 is a flow chart illustrating a method for implementing a REV service according to a fifteenth embodiment of the present invention. In this embodiment, the calling terminal is a terminal in the conventional telecommunication network, the called terminal is a SIP terminal, the called SIP terminal subscribes to the REV service in the provisional mode and the method includes the processes as follows.

2300: The calling terminal and the called SIP terminal have set up a call, and during the call between the calling terminal and the called SIP terminal, the calling terminal sends a facility message in the DSS1 signaling to the conventional telecommunication network; the facility message carries the RequestREV, indicating Case B and requesting the called SIP terminal to pay for the call.

The definition of the RequestREV is given in the ITU-T Q.956.

2301: The conventional telecommunication network checks whether the REV service and the SS7 signaling are supported; if both the REV service and the SS7 signaling are supported, the conventional telecommunication network sends a FAC (Facility) message in the SS7 signaling to a media gateway control unit; the FAC message carries REVCallingReqActive and transfer mode.

The definition of the REVCallingReqActive is given in the ITU-T Q.736.3.

2302: The media gateway control unit converts the FAC message into an INFO message in the SIP signaling and sends the INFO message to the call session control unit B; the INFO message carries a REV request, in order to request the called SIP terminal to pay for the call in the transfer mode.

The process that the INFO message carries the REV request includes: a P-REV-Header is carried in the P-REV-Header field of the INFO message: P-REV-Header: rev-type = rev-request; charging-subscriber = "sipuser-B@terminatingnetwork.com", partial-call = "rest-of-call" or P-REV-Header: rev-type = rev-request; charging-subscriber ="sipuser-B@terminatingnetwork.com", partial-call = "whole-call"; where the "sipuser-B@terminatingnetwork.com" is an identification of the called SIP terminal indicating that the called SIP terminal is requested to pay for the whole call or for the rest of the call.

The media gateway control unit may also add the REV request into other messages in the call, e.g., an UNDATE message, an ACK message and a response message.

2303: The call session control unit B forwards the INFO message carrying the REV request to the REV service control unit B.

The REV service control unit B determines whether the called SIP terminal subscribes to the REV service in the provisional mode. If the called SIP terminal subscribes to the REV service in the provisional mode, the REV service control unit B forwards the INFO message carrying the REV request to the call session control unit B; if the called SIP terminal does not subscribe to the REV service in the provisional mode, the REV service control unit B rejects the call and sends a 4xx reject message carrying the following information in the P-REV-Header field to the called SIP terminal: P-REV-Header: rev-type = rev-response; error-info = "userNotSubscribed ".

2304: The REV service control unit B sends a SIP SUBSCRIBER message carrying the REV request to the call session control unit B, in order to request to activate the REV service temporarily.

The existing SIP SUBSCRIBER message needs to be extended to carry the REV request, e.g., the SIP SUBSCRIBER message is extended by adding a reverse-charging event package.

The SIP SUBSCRIBER message carries the REV request as: Event: reverse-charging

P-REV-Header: rev-type = rev-request; charging-subscriber ="sipuser-B@terminatingnetwork.com", partial-call = "rest-of-call"; where the "sipuser-B@terminatingnetwork.com" is an identification of the called SIP terminal indicating that the called SIP terminal is requested to pay for the rest of the call.

The REV service control unit B may also add the REV request into other messages in the call, e.g., an INFO message, an UNDATE message, an ACK message and other response messages.

2305: The call session control unit B forwards the SIP SUBSCRIBER message carrying the REV request to the called SIP terminal.

The called SIP terminal obtains, according to the REV request in the SIP SUBSCRIBER message, that the calling terminal requests the called SIP terminal to pay for the call.

2306 to 2307: The called SIP terminal sends a 200 OK message to the REV service control unit B in response to the SIP SUBSCRIBER message carrying the REV request.

2308: The called SIP terminal chooses to accept, ignore or reject the REV request from the calling terminal, and sends a NOTIFY message carrying the REV response to the call session control unit B.

If the called SIP terminal accepts the REV request from the calling terminal, the NOTIFY message includes: Event: reverse-charging P-REV-Header: rev-type = rev-request; charging-subscriber = "sipuser-B@terminatingnetwork.com", partial-call = "rest-of-call" or Event: reverse-charging P-REV-Header: rev-type = rev-request; charging-subscriber = "sipuser-B@terminatingnetwork.com", partial-call = "whole-of-call".

If the called SIP terminal rejects the REV request from the calling terminal, the NOTIFY message includes: Event: reverse-charging P-REV-Header: rev-type = rev-response; error-info = "rejectedByUser".

If the called SIP terminal ignores the REV request from the calling terminal, the NOTIFY message includes: Event: reverse-charging P-REV-Header: rev-type = rev-response; error-info = "UserIgnored".

2309: The call session control unit B forwards the NOTIFY message carrying the REV response to the REV service control unit B.

The REV service control unit B checks the REV response carried in the NOTIFY message; if the called SIP terminal accepts the REV request from the calling terminal, the REV service control unit B notifies the charging processing module in the network of the called SIP terminal that the call is charged to the called SIP terminal.

2310 to 2311: The REV service control unit sends a 200 OK message to the called SIP terminal in response to the NOTIFY message carrying the REV response.

2312: The REV service control unit B sends a 200 OK message carrying the REV response to the call session control unit B in response to the INFO message in 2303, indicating that the REV request from the calling terminal is accepted.

The process that the 200 OK message carries REV response includes: a P-REV-Header is carried in the P-REV-Header field of the 200 OK message: P-REV-Header: rev-type = rev-response; charging-subscriber = "sipuser-B@terminatingnetwork.com", partial-call = "rest-of-call" or P-REV-Header: rev-type = rev-response; charging-subscriber = "sipuser-B@terminatingnetwork.com", partial-call = "whole-of-call".

2313: The call session control unit B forwards the 200 OK message carrying the REV response to the media gateway control unit.

2314: The media gateway control unit maps the 200 OK message in the SIP signaling onto an FAC message in the SS7 signaling and sends the FAC message to the conventional telecommunication network; the FAC message carries the REVCallingReqActive and transfer mode according to the REV response carried in the 200 OK message, in order to notify the calling terminal that the called SIP terminal accepts the REV request from the calling terminal.

The definition of the REVCallingReqSetup is given in the ITU-T Q.736.3.

The conventional telecommunication network receives the FAC message, and obtains that the called SIP terminal accepts the REV request and the REV is applied to the call in the transfer mode according to the content of the REVCallingReqActive carried in the FAC message.

2315: The conventional telecommunication network sends a facility message in the DSS 1 signaling to the calling terminal; the facility message carries a RequestREV to indicate that the called SIP terminal pays for the whole call or for the rest of the call.

The definition of the DSS1 RequestREV is given in the ITU-T Q.956.

The rest of the call or the whole call may be charged to the called SIP terminal when the calling terminal and the called SIP terminal are in the communication.

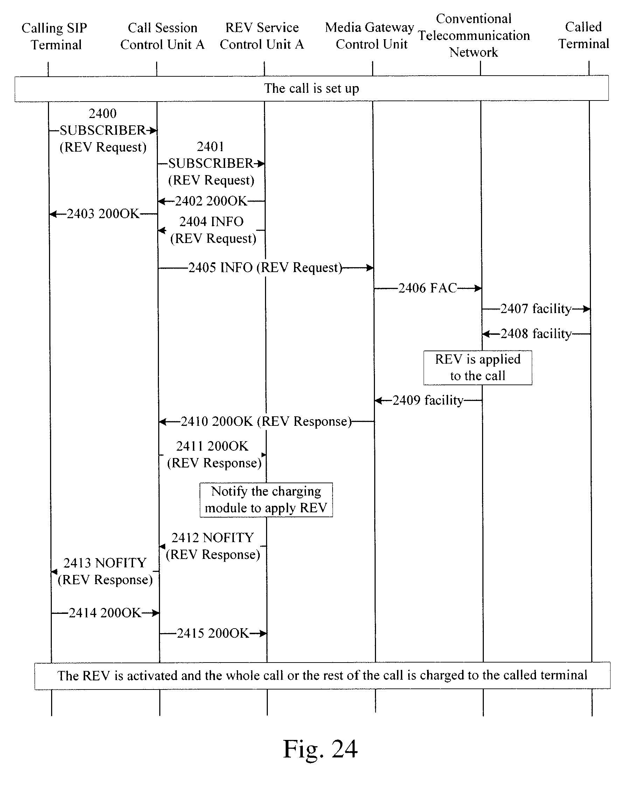

Figure 24 is a flow chart illustrating a method for implementing a REV service according to a sixteenth embodiment of the present invention. In this embodiment, the called terminal is a terminal in the conventional telecommunication network, the calling terminal is a SIP terminal, the called terminal subscribes to the REV service in the provisional mode and the method includes the processes as follows.

2400: The calling SIP terminal and the called terminal have set up a call, and during the call between the calling SIP terminal and the called terminal, the calling SIP terminal sends a SIP SUBSCRIBER message carrying the REV request to the call session control unit A, in order to activate the REV service temporarily.

The existing SIP SUBSCRIBER message needs to be extended to carry the REV request, e.g., the SIP SUBSCRIBER message may be extended by adding a reverse-charging event package.

The SIP SUBSCRIBER message carries the REV request as: Event: reverse-charging

P-REV-Header: rev-type = rev-request; charging-subscriber = "26540808@isdn.com", partial-call = "rest-of-call"; where the " 26540808@isdn.com " is an identification of the called terminal, indicating that the called terminal is requested to pay for the rest of the call.

The call session control unit A may also add the REV request into other messages in the call, e.g., an INFO message, an UNDATE message, an ACK message and other response messages.

2401: The call session control unit A forwards the SIP SUBSCRIBER message carrying the REV request to the REV service control unit A.

2402 to 2403: The REV service control unit A sends a 200 OK message to the called SIP terminal in response to the SIP SUBSCRIBER message carrying the REV request.

2404: The REV service control unit A checks the REV request carried in the SIP SUBSCRIBER message; if the calling SIP terminal requests the called terminal to pay for the call, the REV service control unit A sends an INFO message carrying the REV request to the call session control unit A.

The INFO message carries the REV request as: P-REV-Header: rev-type = rev-request; charging-subscriber = "26540808@isdn.com", partial-call = "rest-of-call", transfer-mode = "transfer". The REV request as: P-REV-Header: rev-type = rev-request; charging-subscriber = "26540808@isdn.com", partial-call = "rest-of-call", transfer-mode = "transfer" indicates that the called terminal is requested to pay for the rest of the call and the REV service adopts the transfer mode.

The INFO message may also carry the REV request as: P-REV-Header: rev-type = rev-request; charging-subscriber = "26540808@isdn.com", partial-call = "whole-of-call", transfer-mode = "transfer". The REV request as: P-REV-Header: rev-type = rev-request; charging-subscriber = "26540808@isdn.com", partial-call = "whole-of-call", transfer-mode = "transfer" indicates that the called terminal is requested to pay for the whole call and the REV service adopts the transfer mode.

The REV service control unit A may also add the REV request into other messages in the call, e.g., an INFO message, an UNDATE message, an ACK message and other response messages.

2405: The call session control unit A forwards the INFO message carrying the REV request to the media gateway control unit.

2406: The media gateway control unit maps the INFO message in the SIP signaling onto an FAC message in the SS7 signaling and sends the FAC message to the conventional telecommunication network; the FAC message carries the REVCallingReqActive and transfer mode according to the REV request carried in the INFO message, in order to request the called terminal to pay for the call.

The definition of the REVCallingReqActive is given in the ITU-T Q.736.3.

2407: The conventional telecommunication network checks whether the called terminal subscribes to the REV service in Case B; if the called terminal subscribes to the REV service in Case B, the conventional telecommunication network sends a facility message in the DSS1 signaling to the called terminal; the facility message carries the RequestREV, in order to request the called terminal to pay for the rest of the call.

The definition of the RequestREV is given in the ITU-T Q.956.

2408: The called terminal chooses to accept the REV request from the calling SIP terminal and sends a facility message the DSS1 signaling to the conventional telecommunication network; the facility message carries the RequestREV indicating that the called terminal accepts the REV request.

The definition of the RequestREV is given in the ITU-T Q.956.

The conventional telecommunication network determines, according to the content of the RequestREV, whether the called terminal accepts the REV request; if the called terminal accepts the REV request, the REV is applied to the call according to the transfer mode provided by the calling SIP terminal.

2409: The conventional telecommunication network sends an FAC message in the SS7 signaling to the media gateway control unit; the FAC message carries the REVCallingReqActive and transfer mode.

2410: The media gateway control unit sends a 200 OK message to the call session control unit A in response to the INFO message in 2405; the 200 OK message carries the REV response according to the REVCallingReqActive of the FAC message in the SS7 signaling.

If the called terminal accepts the REV request from the called SIP terminal, the process that the 200 OK message carries the REV response includes: a P-REV-Header is carried in the P-REV-Header field of the 200 OK message: P-REV-Header: rev-type = rev-request; charging-subscriber = "26540808@isdn.com", partial-call = "rest-of-call" or P-REV-Header: rev-type = rev-request; charging-subscriber = "26540808@isdn.com", partial-call = "whole-of-call".

If the called terminal does not subscribe to the REV service, the process that the 200 OK message carries the REV response includes: a P-REV-Header is carried in the P-REV-Header field of the 200 OK message: P-REV-Header: rev-type = rev-response; error-info = "userNotSubscribed ".

If the called terminal rejects the REV request from the called SIP terminal, the process that the 200 OK message carries the REV response includes: a P-REV-Header is carried in the P-REV-Header field of the 200 OK message: P-REV-Header: rev-type = rev-response; error-info = "rejectedByUser".

If the called terminal ignores the REV request from the called SIP terminal, the process that the 200 OK message carries the REV response includes: a P-REV-Header is carried in the P-REV-Header field of the 200 OK message: P-REV-Header: rev-type = rev-response; error-info = "UserIgnored".

2411: The call session control unit A forwards the 200 OK message carrying the REV response to the REV service control unit A, and the REV service control unit A determines, according to the REV response carried in the 200 OK message, whether the network of the called terminal accepts the REV request. If the network of the called terminal accepts the REV request, the REV service control unit A notifies the charging processing module in the network of the calling SIP terminal that the call is charged to the called terminal.

2412: The REV service control unit A sends a NOTIFY message carrying the REV response to the call session control unit A.

If the called terminal accepts the REV request from the calling SIP terminal, the NOTIFY message carries the REV response as: Event: reverse-charging P-REV-Header: rev-type = rev-request; charging-subscriber = "26540808@isdn.com", partial-call = "rest-of-call" or Event: reverse-charging P-REV-Header: rev-type = rev-request; charging-subscriber = "26540808@isdn.com", partial-call = "whole-of-call".

If the called terminal rejects the REV request from the calling SIP terminal, the NOTIFY message carries the REV response as: Event: reverse-charging P-REV-Header: rev-type = rev-response; error-info = "rejectedByUser".

If the called terminal ignores the REV request from the calling SIP terminal, the NOTIFY message carries the REV response as: Event: reverse-charging P-REV-Header: rev-type = rev-response; error-info = "UserIgnored".

2413: The call session control unit A forwards the NOTIFY message carrying the REV response to the calling SIP terminal, and the calling SIP terminal obtains, according to the REV response carried in the NOTIFY message, that the network of the called terminal agrees to pay for the whole call or for the rest of the call.

2414 to 2415: The calling SIP terminal sends a 200 OK message to the REV service control unit A in response to the NOTIFY message carrying the REV response.

According to this embodiment, the whole call or the rest of the call may be charged to the called terminal while the calling SIP terminal and the called terminal are in the communication.

Embodiments in Case B in which the called terminal requests the REV service are as follows.

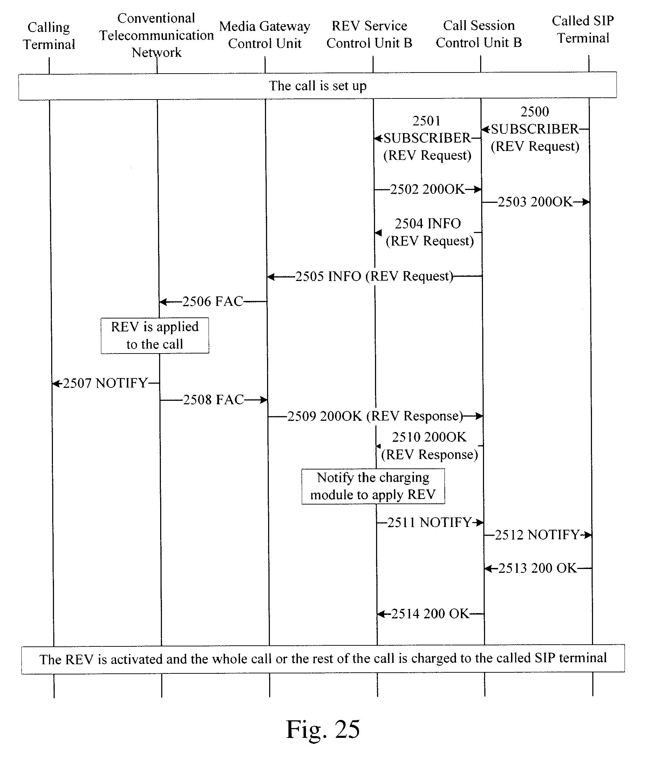

Figure 25 is a flow chart illustrating a method for implementing a REV service according to a seventeenth embodiment of the present invention. In this embodiment, the calling terminal is a terminal in the conventional telecommunication network, the called terminal is a SIP terminal, the called SIP terminal subscribes to the REV service in the provisional mode and the method includes the processes as follows.

2500: The calling terminal and the called SIP terminal have set up a call, and during the call between the calling terminal and the called SIP terminal, the called SIP terminal sends a SIP SUBSCRIBER message carrying the REV request to the call session control unit B, in order to activate the REV service temporarily.

The existing SIP SUBSCRIBER message needs to be extended to carry the REV request, e.g., the SIP SUBSCRIBER message may be extended by adding a reverse-charging event package.

The SUBSCRIBER message carries the REV request as: Event: reverse-charging P-REV-Header: rev-type = rev-request; charging-subscriber ="sipuser-B@terminatingnetwork.com", partial-call = "rest-of-call"; where the "sipuser-B@terminatingnetwork.com" is an identification of the called SIP terminal indicating that the called SIP terminal is requested to pay for the rest of the call.

The call session control unit B may also add the REV request into other messages in the call, e.g., an INFO message, an UNDATE message, an ACK message and other response messages.

2501: The call session control unit B forwards the SIP SUBSCRIBER message carrying the REV request to the REV service control unit B.

The REV service control unit B determines whether the called SIP terminal subscribes to the REV service. If the called SIP terminal subscribes to the REV service, the REV service control unit B forwards the SIP SUBSCRIBER message carrying the REV request to the call session control unit B; if the called SIP terminal does not subscribe to the REV service, the REV service control unit B sends a 4xx reject message to the called SIP terminal; the 4xx reject message carries the following information in the P-REV-Header field: Event: reverse-charging P-REV-Header: rev-type = rev-response; error-info = "userNotSubscribed ". Event: reverse-charging P-REV-Header: rev-type = rev-response; error-info = "userNotSubscribed " indicates that the called SIP terminal does not subscribe to the REV service.

2502: The REV service control unit B sends a 200 OK message to the call session control unit B in response to the SIP SUBSCRIBER message carrying REV request.

2503: The call session control unit B forwards the 200 OK message to the called SIP terminal.

2504: The REV service control unit B sends an INFO message carrying the REV request to the call session control unit B, in order to request the calling terminal that the called SIP terminal pays for the call.

The process that the INFO message carries the REV request includes: an Event is carried in the P-REV-Header field of the INFO: Event: reverse-charging P-REV-Header: rev-type = rev-request; charging-subscriber = "sipuser-B@terminatingnetwork.com", partial-call = "rest-of-call".

The REV service control unit B may also add the REV request into other SIP messages in the call, e.g., an UNDATE message, an ACK message and a response message.

2505: The call session control unit B forwards the INFO message carrying the REV request to the media gateway control unit.

2506: The media gateway control unit sends an FAC message in the SS7 signaling to the conventional telecommunication network; the FAC message carries the REVCalledRequest to indicate that the called SIP terminal pays for the rest of the call.

If the conventional telecommunication network supports the REV service, the call is charged to the called SIP terminal; if the conventional telecommunication network does not support the REV service, the call is rejected and an error code is returned.

The definition of the REVCalledRequest is given in the ITU-T Q.736.3.

2507: The conventional telecommunication network sends a NOTIFY message in the DSS1 signaling to the calling terminal, in order to indicate "Reverse charging (For the rest of the call)", which means that the called SIP terminal pays for the rest of the call.

The definition of the DSS1 NOTIFY message is given in the ITU-T Q.956.

2508: The conventional telecommunication network sends an FAC message in the SS7 signaling to the media gateway control unit; the FAC message carries the REVCalledRequest to indicate the media gateway control unit that the network of calling terminal accepts that the called SIP terminal pays for the rest of the call.

2509: The media gateway control unit sends a 200 OK message to the call session control unit B in response to the INFO message carrying the REV request; the 200 OK message carries the REV response indicating that the REV request from the called SIP terminal is accepted by the network of the calling terminal.

The process that the 200 OK message carries the REV response includes: an Event is carried in the P-REV-Header field of the 200 OK message: Event: reverse-charging P-REV-Header: rev-type = rev-request; charging-subscriber = "sipuser-B@terminatingnetwork.com", partial-call = "rest-of-call".

The media gateway control unit may also add the REV response into other messages in the call, e.g., an INFO message, an UNDATE message, an ACK message and other response messages.

2510: The call session control unit B forwards the 200 OK message carrying the REV response to the REV service control unit B, and the REV service control unit B determines, according to the REV response carried in the 200 OK message, whether the network of the calling terminal accepts the REV request. If the network of the calling terminal accepts the REV request, the REV service control unit B notifies the charging processing module in the network of the called SIP terminal that the call is charged to the called SIP terminal.

2511: The REV service control unit B sends a NOTIFY message to the call session control unit B, indicating that the REV request from the called SIP terminal is accepted.

The NOTIFY message may carry Event: reverse-charging P-REV-Header: rev-type = rev-request; charging-subscriber = "sipuser-B@terminatingnetwork.com", partial-call = "rest-call".

2512: The call session control unit B forwards the NOTIFY message to the called SIP terminal, and the called SIP terminal obtains, according to the P-REV-Header field in the NOTIFY message, that the calling terminal accepts that the called SIP terminal pays for the rest of the call.

2513 to 2514: The called SIP terminal sends a 200 OK message to the REV service control unit B in response to the NOTIFY message.

According to this embodiment, the rest of the call may be charged to the called SIP terminal while the calling terminal and the called SIP terminal are in the communication.

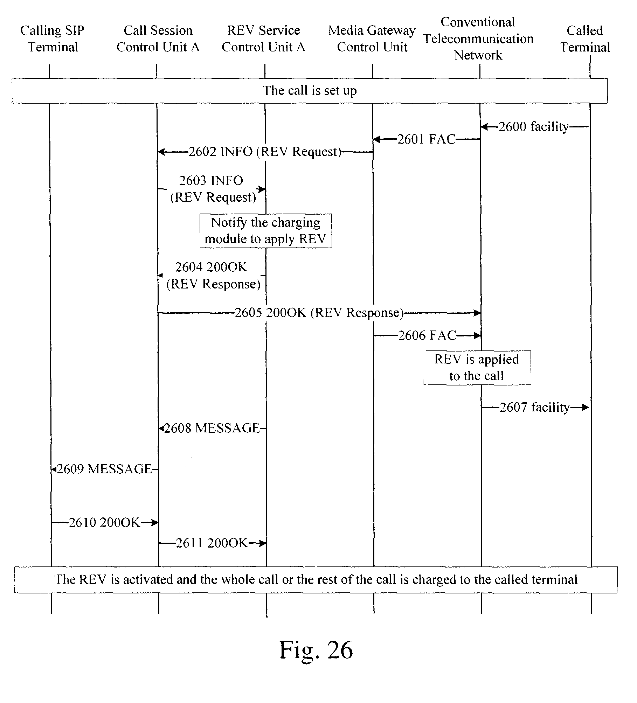

Figure 26 is a flow chart illustrating a method for implementing a REV service according to an eighteenth embodiment of the present invention. In this embodiment, the called terminal is a terminal in the conventional telecommunication network, the calling terminal is a SIP terminal, the called terminal subscribes to the REV service in the provisional mode and the method includes the processes as follows.

2600: The calling SIP terminal and the called terminal have set up a call, and during the call between the calling SIP terminal and the called terminal, the called terminal sends a facility message in the DSS1 signaling to the conventional telecommunication network; the facility message carries the RequestREV, indicating Case B and requesting the called terminal to pay for the call.

The definition of the RequestREV is given in the ITU-T Q.956.

2601: The conventional telecommunication network determines whether the called terminal subscribes to the REV service in Case B; if the called terminal subscribes to the REV service in Case B, the conventional telecommunication network sends an FAC message carrying REVCalledRequest to the media gateway control unit, in order to indicate that the called terminal pays for the rest of the call.

The definition of the REVCalledRequest is given in the ITU-T Q.736.3.

2602: The media gateway control unit sends an INFO message carrying a REV request to the call session control unit A, in order to request the calling terminal that the called SIP terminal pays for the rest of the call.

The process that the INFO message carries the REV request includes: a P-REV-Header is carried in the P-REV-Header field of the INFO message: P-REV-Header: rev-type = rev-request; charging-subscriber = "26540808@isdn.com", partial-call = "rest-of-call"; where the " 26540808@isdn.com " is an identification of the called terminal in the packet network, indicating that the called terminal is requested to pay for the rest of the call.

The REV service control unit B may also add the REV request into other SIP messages in the call, e.g., an UNDATE message, an ACK message and a response message.

2603: The call session control unit A forwards the INFO message carrying the REV request to the REV service control unit A.

The REV service control unit A determines whether the network of the calling SIP terminal supports the REV. If the network of the calling SIP terminal does not support the REV, the REV service control unit A rejects the call and sends a 4xx reject message carrying the following information in the P-REV-Header field: P-REV-Header: rev-type = rev-response; error-info = "rejectedByNetwork"; if the network of the calling SIP terminal supports the REV service, the REV service control unit A obtains, according to the REV request carried in the INFO message, that the called terminal requests to pay for the rest of the call, and the REV service control unit A notifies the charging processing module in the network of the calling SIP terminal that the rest of the call is charged to the called terminal.

2604: The REV service control unit A sends a 200 OK message carrying the REV response to the call session control unit A in response to the INFO message, indicating that the REV service control unit A accepts the REV request from the called terminal.

The process that the 200 OK message carries the REV response includes: a P-REV-Header is carried in the P-REV-Header field of the 200 OK message: P-REV-Header: rev-type = rev-response; charging-subscriber = "26540808@isdn.com", partial-call = "rest-of-call".

The REV service control unit A may also add the REV response into other SIP messages in the call, e.g., an INFO message, an UNDATE message, an ACK message and other response messages.

2605: The call session control unit A forwards the 200 OK message carrying the REV response to the media gateway control unit.

2606: The media gateway control unit sends an FAC message in the SS7 signaling to the conventional telecommunication network; the FAC message carries the REVCalledRequest to indicate that the network of the calling SIP terminal accepts that the called terminal pays for the rest of the call.

The conventional telecommunication network then charges the called terminal for the present call.

2607: The conventional telecommunication network sends a facility message in the DSS1 signaling to the called terminal, and the facility message carries the RequestREV, in order to indicate that the called terminal pays for the rest of the call.

The definition of the DSS1 RequestREV is given in the ITU-T Q.956.

2608 to 2611: The REV service control unit A further sends a message to the calling SIP terminal, indicating the calling SIP terminal that the called SIP terminal pays for the whole call or for the rest of the call.

According to this embodiment, the rest of the call may be charged to the called terminal while the calling SIP terminal and the called terminal are in the communication.

Embodiments in Case C are as follows.

Embodiments in Case C are similar to the embodiment shown in Figure 25 or 26, and the difference between the embodiments in Case C and the embodiment shown in Figure 25 or 26 only includes: when a called terminal (the called terminal may be a called terminal in the packet telecommunication network or a called SIP terminal) requests REV in Case C, the REV is applied to the whole call. Therefore the embodiments in Case C also resemble the embodiments in Case B and will not be described any more herein.

Embodiments in Case D are as follows.

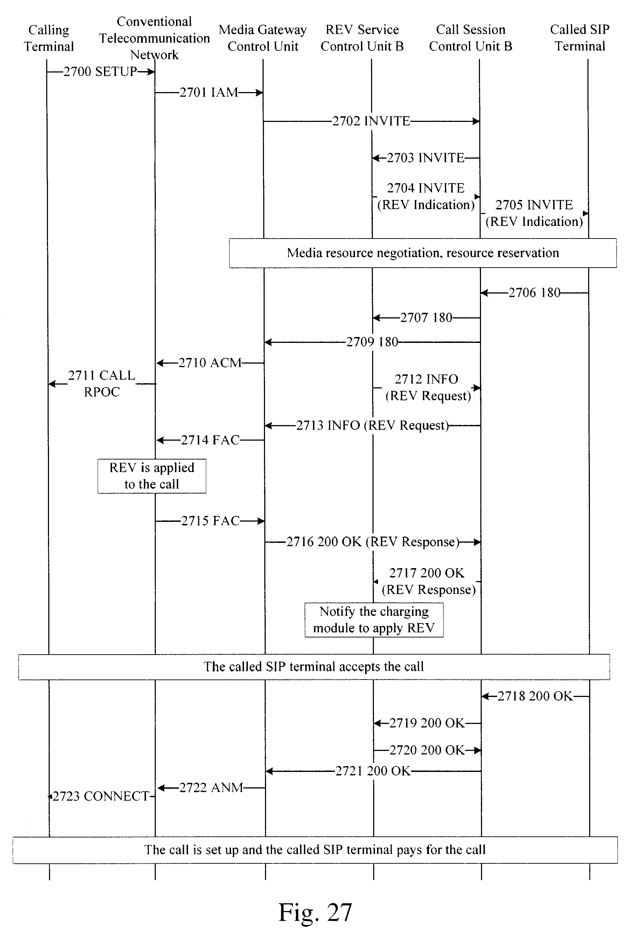

Figure 27 is a flow chart illustrating a method for implementing a REV service according to a nineteenth embodiment of the present invention. In this embodiment, the calling terminal is a terminal in the conventional telecommunication network, the called terminal is a SIP terminal, the called SIP terminal subscribes to the REV service in the permanent mode and the method includes the processes as follows.

2700: The calling terminal initiates a call and sends a SETUP message in the DSS 1 signaling to the conventional telecommunication network.

2701: The conventional telecommunication network sends an IAM message in the SS7 signaling to the media gateway control unit.

2702: The media gateway control unit sends a SIP INVITE message to the call session control unit B.

2703: The call session control unit B forwards the SIP INVITE message to the REV service control unit B.

2704: The REV service control unit B determines whether the called SIP terminal subscribes to the REV service in the permanent mode; if the called SIP terminal subscribes to the REV service in the permanent mode, the REV service control unit B adds a REV indication into the SIP INVITE message to notify the called SIP terminal that the called SIP terminal is charged for the call.

The SIP INVITE message carries the REV indication as: P-REV-Header: rev-type = rev-indication; charging-subscriber = "sipuser-B@terminatingnetwork.com"; where the "sipuser-B@terminatingnetwork.com" is an identification of the called SIP terminal indicating that the called SIP terminal pays for the call.

The REV service control unit B may also add the REV indication into other SIP messages later in the call, e.g., an INFO message, an UNDATE message, an ACK message and a response message.

2705: The call session control unit B forwards the SIP INVITE message carrying the REV indication to the called SIP terminal.

2706 to 2711: The called SIP terminal and the media gateway control unit start the media resource negotiation and resource reservation process; the called SIP terminal rings and sends a 180 ringing message to the media gateway control unit via the call session control unit B and the REV service control unit B, and the media gateway control unit converts the 180 ringing message into an ACM message in the SS7 signaling, and sends the ACM message to the conventional telecommunication network; the conventional telecommunication network then sends a CALL PROC message to the calling terminal.

2712: The REV service control unit B sends an INFO message carrying a REV request to the call session control unit B, in order to request the calling terminal that the called SIP terminal pays for the call.

The process that INFO message carries the REV request includes: a P-REV-Header is carried in the P-REV-Header field of the INFO message: P-REV-Header: rev-type = rev-request; charging-subscriber = "sipuser-B@terminatingnetwork.com".

The REV service control unit B may also add the REV request into other SIP messages in the call, e.g., an UNDATE message, an ACK message and a response message.

2713: The call session control unit B forwards the INFO message carrying the REV request to the media gateway control unit.

2714: The media gateway control unit sends an FAC message in the SS7 signaling to the conventional telecommunication network; the FAC message carries the REVCalledRequest to indicate that the called SIP terminal pays for the call.

If the conventional telecommunication network supports the REV service, the call is charged to the called SIP terminal; if the conventional telecommunication network does not support the REV service, the call is rejected and an error code is returned.

The definition of the REVCalledRequest is given in the ITU-T Q.736.3.

2715: The conventional telecommunication network sends an FAC message in the SS7 signaling to the media gateway control unit; the FAC message carries the REVCalledRequest, in order to indicate the media gateway control unit that the network of calling terminal accepts that the called SIP terminal pays for the call.

2716: The media gateway control unit sends a 200 OK message to the call session control unit B in response to the INFO message; the 200 OK message carries the REV response indicating that the REV request from the called SIP terminal is accepted by the network of the calling terminal.

The process that the 200 OK message carries the REV response includes: a P-REV-Header is carried in the P-REV-Header field of the 200 OK message: P-REV-Header: rev-type = rev-response; charging-subscriber = "sipuser-B@terminatingnetwork.com".

The media gateway control unit may also add the REV response into other messages in the call, e.g., an INFO message, an UNDATE message, an ACK message and other response messages.

2717: The call session control unit B forwards the 200 OK message carrying the REV response to the REV service control unit B, and the REV service control unit B determines, according to the REV response carried in the 200 OK message, whether the network of the calling terminal accepts the REV request. If the network of the calling terminal accepts the REV request, the REV service control unit B notifies the charging processing module in the network of the called SIP terminal that the call is charged to the called SIP terminal.

2718 to 2723: The called SIP terminal is off-hook and sends a 200 OK message to the media gateway control unit via the call session control unit B and the REV service control unit B; the media gateway control unit converts the 200 OK message into an ANM in the SS7 signaling and forwards the ANM to the conventional telecommunication network; the conventional telecommunication network sends a CONNECT carrying the REV notification indication "Reverse charging (Whole call)" to the calling terminal.

The definition of the REV notification indication is given in the ITU-T Q.956.

The call is thus set up, the calling terminal and the called SIP terminal start communication and the called SIP terminal is charged for the call.

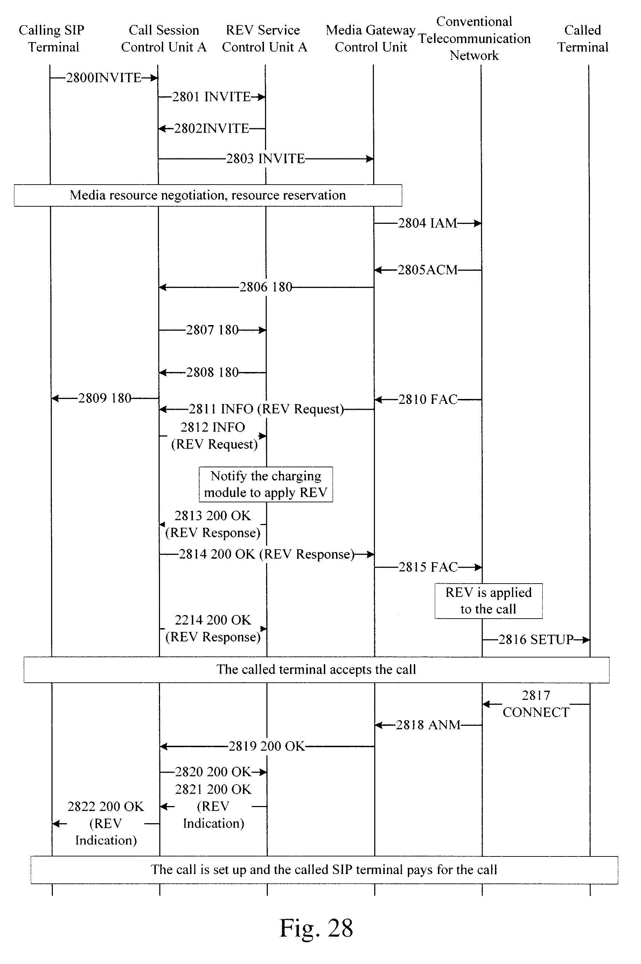

Figure 28 is a flow chart illustrating a method for implementing a REV service according to a twentieth embodiment of the present invention. In this embodiment, the called terminal is a terminal in the conventional telecommunication network, the calling terminal is a SIP terminal, the called terminal subscribes to the REV service in the permanent mode and the method includes the processes as follows.

2800: The calling SIP terminal initiates a call and sends a SIP INVITE message to the call session control unit A.

2801: The call session control unit A forwards the SIP INVITE message to the REV service control unit A.

2802: The REV service control unit A forwards the SIP INVITE message to the call session control unit A.

2803: The call session control unit A forwards the SIP INVITE message to the media gateway control unit.

2804: The calling SIP terminal and the media gateway control unit start the media resource negotiation and resource reservation process; when the media resource negotiation and resource reservation process are successfully completed, the media gateway control unit sends an IAM message in the SS7 signaling to the conventional telecommunication network.

2805: The conventional telecommunication network sends an ACM message in the SS7 signaling to the media gateway control unit.

2806 to 2809: The media gateway control unit sends a 180 message to the calling SIP terminal via the call session control unit A and the REV service control unit A.

2810: The conventional telecommunication network determines whether the called terminal subscribes to the REV service in the permanent mode, i.e., in Case D; if the called terminal subscribes to the REV service in Case D, the conventional telecommunication network sends a FAC message carrying REVCalledRequest to the media gateway control unit, in order to indicate that the called terminal pays for the call.

The definition of the REVCalledRequest is given in the ITU-T Q.736.3.

2811: The media gateway control unit sends an INFO message carrying a REV request to the call session control unit A, in order to request the calling terminal that the called SIP terminal pays for the call.

The process that the INFO message carries the REV request includes: a P-REV-Header is carried in the P-REV-Header field of the INFO message: P-REV-Header: rev-type = rev-request; charging-subscriber = "26540808@isdn.com"; where the "26540808@isdn.com" is an identification of the called terminal in the packet network, indicating that the called terminal is requested to pay for the call.

The REV service control unit B may also add the REV request into other SIP messages in the call, e.g., an UNDATE message, an ACK message and a response message.

2812: The call session control unit A forwards the INFO message carrying the REV request to the REV service control unit A.

The REV service control unit A determines whether the network of the calling SIP terminal supports the REV service. If the network of the calling SIP terminal does not support the REV service, the REV service control unit A rejects the call and sends a 4xx reject message carrying the following information in the P-REV-Header field: P-REV-Header: rev-type = rev-response; error-info = "rejectedByNetwork"; if the network of the calling SIP terminal supports the REV service, the REV service control unit A obtains, according to the REV request carried in the INFO message, that the called terminal requests to pay for the call, and notifies the charging processing module in the network of the calling SIP terminal that the call is charged to the called terminal.

2813: The REV service control unit A sends a 200 OK message to the call session control unit A in response to the INFO message carrying the REV request; the 200 OK message carries the REV response indicating that the REV service control unit A accepts the REV request from the called terminal.

The process that the 200 OK message carries the REV response includes: a P-REV-Header is carried in the P-REV-Header field of the 200 OK message: P-REV-Header: rev-type = rev-response; charging-subscriber = "26540808@isdn.com".

The REV service control unit A may also add the REV response into other SIP messages in the call, e.g., an INFO message, an UNDATE message, an ACK message and other response messages.

2814: The call session control unit A forwards the 200 OK message carrying the REV response to the media gateway control unit.

2815: The media gateway control unit sends an FAC message in the SS7 signaling to the conventional telecommunication network; the FAC message carries the REVCalledRequest to indicate that the network of the calling terminal accepts that the called terminal pays for the call.

The conventional telecommunication network then charges the called terminal for the present call.

2816: The conventional telecommunication network sends a SETUP message in the DSS1 signaling to the called terminal; the SETUP message carries the REVIndication to indicate that the called terminal pays for the call.

The definition of the REVIndication is given in the ITU-T Q.956.

2817 to 2822: The called terminal is off-hook and sends a CONNECT in the DSS1 signaling to the conventional telecommunication network; the conventional telecommunication network sends an ANM in the SS7 signaling to the media gateway control unit, and the media gateway control unit sends a 200 OK message to the calling SIP terminal via the call session control unit A and the REV service control unit A; the calling terminal and the called SIP terminal start communication and the call is charged to the called terminal.

The REV service control unit A adds a REV indication into the 200 OK message to notify the calling SIP terminal that the called terminal pays for the call, in such case the P-REV-Header field of the 200 OK message carries P-REV-Header: P-REV-Header rev-type = rev-indication; charging-subscriber = "26540808@isdn.com".

The REV service control unit A may also add the REV indication into other SIP messages in the call, e.g., an INFO message, an UNDATE message, an ACK message and other response messages.

According to the system and method of the present invention, the REV service may be provided for the packet telecommunication network and for the interworking between the packet telecommunication network and the circuit switched conventional telecommunication network. Therefore the demands of terminals for REV are satisfied. In embodiments of the present invention, the calling terminal may subscribe to the REV service and the calling terminal is charged for the call when the REV service is applied, or the called terminal may subscribe to the REV service and the called terminal is charged for the call when the REV service is applied. The REV service may be subscribed in the provisional mode or the permanent mode. In the provisional mode, the REV is initiated by the calling terminal or the called terminal upon the setup of the call or during the call, the REV may be applied to the whole call or to the rest of the call; in the permanent mode, the REV is initiated by the calling terminal or by the REV service control unit on the network side of the called terminal upon the setup of the call or during the call, the REV may be applied to the whole call or to the rest of the call.

The object, technical solution and merits of the present invention have been described in detail with the embodiments. It should be appreciated that the foregoing is only embodiments of this invention and is not for use in limiting the invention. Any modification, equivalent substitution and improvement within the principles of the invention should be covered in the protection scope of the invention.

## Claims

1. A system for implementing reverse charging, REV, service in a packet network, comprising at least one call session control unit and at least one charging processing module, character comprising:
a REV service control unit, configured to control a REV service, wherein the REV service control unit interacts with a call session control unit via a Session Initiation Protocol, SIP, message, and interacts with a charging processing module.

2. The system of Claim 1, wherein one call session control unit exchanges REV information with another call session control unit via an E2 interface adopting SIP.

3. The system of Claim 1, wherein the REV service control unit exchanges REV information with the call session control unit via an E3 interface adopting SIP or an internal interface.

4. The system of Claim 1, further comprising:
multiple REV service control units, configured to interact with the call session control unit respectively via a SIP message, wherein the multiple REV service control units exchange REV information with the call session control unit respectively via an E3 interface adopting SIP.

5. The system of Claim 1, wherein the REV service control unit exchanges REV information with the charging processing module via an E7 interface adopting Diameter protocol for offline charging or online charging.

6. The system of Claim 1, wherein the call session control unit interacts with the charging processing module, wherein the call session control unit exchanges REV information with the charging processing module via an E7 interface adopting Diameter protocol or SIP for offline charging or online charging.

7. The system of Claim 1, further comprising:
at least one SIP terminal, configured to interact with the call session control unit via a SIP message, wherein the at least one SIP terminal exchanges REV information with the call session control unit via an E1 interface adopting SIP.

8. The system of Claim 1, further comprising:
an access gateway control unit, configured to interact with the call session control unit via SIP message.

9. The system of Claim 8, wherein the access network control unit exchanges REV information with the call session control unit via an internal interface or an E8 interface adopting SIP and converts all or a part of REV information carried in a conventional circuit switched message into REV information carried in a SIP message and converts all or a part of REV information carried in a SIP message into REV service information carried in a conventional circuit switched message.

10. The system of Claim 8, wherein the access gateway control unit interacts with the charging processing module, wherein the access gateway control unit exchanges REV information with the charging processing module via an E7 interface adopting Diameter protocol.

11. The system of Claim 1, wherein the REV service control unit comprises:
a SIP processing module, a REV service logic processing module and a REV notification module, wherein
the SIP processing module is configured to receive a SIP message from the call session control unit, parse the SIP message and send the parsed SIP message to the REV service logic processing module; or generate a SIP message according to a processing result from the REV service logic processing module and send the generated SIP message to the call session control unit;
the REV service logic processing unit is configured to perform the logic process according to the parsed SIP message from the SIP processing module and user subscription information stored in the REV service logic processing unit, and notify the SIP processing module and the REV notification module of the processing result; and
the REV notification module is configured to send charging information to the charging processing module upon receipt of the processing result from the REV service logic processing module.

12. The system of Claim 1, further comprising:
a circuit switched telecommunication network and a media gateway control unit, wherein the circuit switched telecommunication network interacts, through the media gateway control unit, with the call session control unit respectively, wherein the circuit switched telecommunication network exchanges REV information with the call session control unit and converts all or a part of REV information carried in a conventional circuit switched message into REV information carried in a SIP message and converts all or a part of REV service information carried in a SIP message into REV service information carried in a conventional circuit switched message.

13. The system of Claim 12, wherein the media gateway control unit interacts with the charging processing module, and the media gateway control unit exchanges the REV information with the charging processing module via an E7 interface adopting Diameter protocol.

14. The system of Claim 12, wherein an interface between the media gateway control unit and the call session control unit is an E4 interface adopting SIP or a customized internal interface.

15. The system of Claim 10 or 12, wherein the REV information carried in the conventional circuit switched message is converted into the REV information carried in the SIP message by encapsulating or mapping.

16. The system of Claim 3, 5, 6, 9, 10, 12 or 13, wherein the REV information comprises at least one of: REV request information, REV response information, REV indication information, REV charging indication information and charging number information.

17. The system of Claim 16, wherein the REV information further comprises at least one of: identification information indicating that a SIP user requests a REV, REV charging mode information and information indicating whether the REV is applied to the whole call or to a part of the call.

18. The system of Claim 16, wherein the REV response information comprises information indicating whether a REV request is accepted, rejected or ignored.

19. A method for implementing a reverse charging, REV, service in a packet network, comprising:
sending, by a network of a calling terminal, a first SIP message carrying REV information to a network of a called terminal, and
determining, by the network of the called terminal, to apply a REV according to the REV information carried in the first SIP message;
or
sending, by a network of a called terminal, a second SIP message carrying REV information to a network of a calling terminal, and
determining, by the network of the calling terminal, to apply the REV service according to the REV information carried in the second SIP message.

20. The method of Claim 19, wherein,
after the network of the called terminal determines to apply the REV, the method further comprises:
sending, by the network of the called terminal, a third SIP message carrying the REV information to the network of the calling terminal; and
determining, by the network of the calling terminal, to apply the REV according to the REV information in the third SIP message;
wherein, after the network of the calling terminal determines to apply the REV, the method further comprises:
sending, by the network of the calling terminal, a fourth SIP message carrying the REV information to the network of the called terminal; and
determining, by the network of the called terminal, to apply the REV according to the REV information carried in the SIP message.

21. The method of Claim 19, wherein the determining, by the network of the called terminal, to apply the REV according to the REV information carried in the second SIP message comprises:
notifying, by a call session control unit or a REV service control unit corresponding to the called terminal, a charging processing module according to the REV information carried in the second SIP message that the call is charged to the calling terminal; or
notifying, by a call session control unit or a REV service control unit corresponding to the called terminal, a charging processing module according to the REV information carried in the second SIP message that the call is charged to the called terminal; or
notifying, by a call session control unit or a REV service control unit corresponding to the called terminal, a charging processing module according to the REV information carried in the second SIP message that reverse charging is applied to the call.

22. The method of Claim 19, wherein the determining, by the network of the calling terminal, to apply the REV according to the REV information carried in the first SIP message comprises:
notifying, by a call session control unit or a REV service control unit corresponding to the calling terminal, a charging processing module according to the REV information carried in the first SIP message that the call is charged to the called terminal; or
notifying, by the call session control unit or the REV service control unit corresponding to the calling terminal, a charging processing module according to the REV information carried in the first SIP message that the call is charged to the calling terminal; or
notifying, by the call session control unit or the REV service control unit corresponding to the calling terminal, a charging processing module according to the REV information carried in the first SIP message that reverse charging is applied to the call.

23. The method of Claim 19, wherein the first SIP message carrying the REV information sent by the network of the calling terminal to the network of the called terminal is a REV request; and
after the network of the called terminal determines to apply the REV, the method further comprises:
sending, by the network of the called terminal, a REV response to the network of the calling terminal.

24. The method of Claim 19, wherein the first SIP message carrying the REV information sent by the network of the calling terminal to the network of the called terminal is a REV indication.

25. The method of Claim 19, wherein the second SIP message carrying the REV information sent by the network of the called terminal to the network of the calling terminal is a REV request; and
after the network of the calling terminal determines to apply the REV, the method further comprises:
sending, by the network of the calling terminal, a REV response to the network of the calling terminal.

26. The method of Claim 19, wherein the second SIP message carrying the REV information sent by the network of the called terminal to the network of the called terminal is a REV indication.

27. The method of Claim 24 or 26, wherein the REV indication is carried in a SIP INVITE message, an INFO message, an UPDATE message, an ACK message or a response; and the REV indication carries an identification of a SIP terminal applying the REV, REV charging mode information and information indicating whether the REV is applied to the whole call or to the rest of the call.

28. The method of Claim 23 or 25, wherein the REV request is carried in a SIP INVITE message, an INFO message, an UPDATE message, an ACK message or a response; and the REV request carries an identification of the SIP terminal applying the REV, REV charging mode information and information indicating whether the REV is applied to the whole call or to the rest of the call.

29. The method of Claim 23 or 25, wherein the REV response is carried in a SIP INVITE message, an INFO message, an UPDATE message, an ACK message or a response; the REV response indicates that the REV request is accepted, rejected or ignored and the REV response carries an identification of the SIP terminal applying the REV, REV charging mode information and information indicating whether the REV is applied to the whole call or to the rest of the call.

30. The method of Claim 21 or 22, wherein the notifying the charging processing module to charge comprises:
sending the charging processing module a Diameter message carrying information on whether the REV is activated and an identification of a charged terminal, and charging by the charging processing module according to the Diameter message.

31. A method for implementing a reverse charging, REV, service in a packet network, comprising:
sending, by a circuit switched telecommunication network, a first message carrying REV information to a packet telecommunication network, and determining, by the packet telecommunication network, to apply the REV according to the REV information in the first message; or
sending, by a packet telecommunication network, a second message carrying REV information to a circuit switched telecommunication network, and determining, by the circuit switched telecommunication network, to apply the REV according to the REV information in the second message.

32. The method of Claim 31, wherein, after the packet telecommunication network determines to apply the REV, the method further comprises:
sending, by the packet telecommunication network, a third message carrying the REV information to the circuit switched telecommunication network; and
determining, by the circuit switched telecommunication network, to apply the REV according to the REV information in the third message;
wherein, after the circuit switched telecommunication network determines to apply the REV, the method further comprises:
sending, by the circuit switched telecommunication network, a message carrying the REV information to the packet telecommunication network; and
determining, by the packet telecommunication network, to apply the REV service according to the REV information in the message.

33. The method of Claim 31 or 32, wherein the determining, by the packet telecommunication network, to apply the REV service according to the REV information in the fourth message comprises:
notifying, by a call session control unit, a REV service control unit or a media gateway control unit, a charging processing module according to the REV information in the fourth message that the call is charged to the calling terminal; or
notifying, by a call session control unit, a REV service control unit or a media gateway control unit, a charging processing module according to the REV information in the fourth message that the call is charged to the called terminal; or
applying, by a call session control unit, a REV service control unit or a media gateway control unit, the REV to the call according to the REV information carried in the fourth message.

34. The method of Claim 31, wherein the second message carrying the REV information sent by the packet telecommunication network to the circuit switched telecommunication network is a REV request; and
after the circuit switched telecommunication network determines to apply the REV, the method further comprises:
sending, by the circuit switched telecommunication network, a REV response to the packet telecommunication network.

35. The method of Claim 31, wherein the second message carrying the REV information sent by the packet telecommunication network to the circuit switched telecommunication network is a REV indication.

36. The method of Claim 31, wherein the first message carrying the REV information sent by the circuit switched telecommunication network to the packet telecommunication network is a REV request; and
after the packet telecommunication network determines to apply the REV, the method further comprises:
sending, by the packet telecommunication network, a REV response to the circuit switched telecommunication network.

37. The method of Claim 31, wherein the first message carrying the REV information sent by the circuit switched telecommunication network to the packet telecommunication network is a REV indication.

38. The method of Claim 35 or 37, wherein first the REV indication is carried in a SIP INVITE message, an INFO message, an UPDATE message, an ACK message or a response; and the REV indication carries an identification of the SIP terminal applying the REV, REV charging mode information and information indicating whether the REV is applied to the whole call or to the rest of the call.

39. The method of Claim 34 or 36, wherein the REV request is carried in a SIP INVITE message, an INFO message, an UPDATE message, an ACK message or a response; and the REV request carries an identification of a SIP terminal applying the REV, REV charging mode information and information indicating whether the REV is applied to the whole call or to the rest of the call.

40. The method of Claim 34 or 36, wherein the REV response is carried in a SIP INVITE message, an INFO message, an UPDATE message, an ACK message or a response; the REV response indicates that the REV request is accepted, rejected or ignored; and the REV response carries an identification of a SIP terminal applying the REV, REV charging mode information and information indicating whether the REV is applied to the whole call or to the rest of the call.

41. The method of Claim 33, wherein the notifying the charging processing module to charge comprises:
sending the charging processing module a Diameter message carrying information on whether the REV service is activated and an identification of a charged terminal, and charging by the charging processing module according to the Diameter message.

42. A reverse charging, REV, service control unit, comprising:
a SIP processing module, a REV service logic processing module and a REV notification module, wherein
the SIP processing module is configured to receive a first SIP message, parse the first SIP message and send the parsed first SIP message to the REV service logic processing module; or generate a second SIP message according to a processing result of the REV service logic processing module and send the second SIP message;
the REV service logic processing unit is configured to perform logic process according to the parsed first SIP message from the SIP processing module and user subscription information stored in the REV service logic processing unit, and notify the SIP processing module and the REV notification module of the processing result; and
the REV notification module is configured to notify a charging processing module to apply the REV upon receipt of the processing result from the REV service logic processing module.

43. The REV service control unit of Claim 42, wherein the SIP message is sent to the SIP processing module by a call session control unit; the second SIP message generated by the SIP processing module is sent to the call session control unit.
